# EUROPEAN PATENT SPECIFICATION

(11) **EP 4 393 826 B1**
(45) Date of publication and mention of the grant of the patent: **09.09.2026**
(21) Application number: 23779283.3
(22) Date of filing: 06.03.2023
(51) Int. Cl.: B64U 50/35, B64U 50/31, H02J 50/30, H02J 50/40, H02J 50/90, B60L 53/12, B60L 53/62, B64U 10/13, B60L 53/67, B60L 53/68

(54) **POWER FEED MANAGEMENT DEVICE, PROGRAM, SYSTEM, FLIGHT VEHICLE, AND METHOD**
VORRICHTUNG ZUR VERWALTUNG DER STROMVERSORGUNG, PROGRAMM, SYSTEM, FLUGGERÄT UND VERFAHREN
DISPOSITIF DE GESTION D'ALIMENTATION EN ÉNERGIE, PROGRAMME, SYSTÈME, VÉHICULE VOLANT, ET PROCÉDÉ

(30) Priority: 30.03.2022 JP 2022057742
(43) Date of publication of application: 03.07.2024
(73) Proprietor: Softbank Corp., Tokyo 105-7529 (JP)
(72) Inventor: TAJIKA, Akihiko, Tokyo 105-7529 (JP); KATSUYA, Taichi, Tokyo 105-7529 (JP)
(74) Representative: Michalski Hüttermann & Partner mbB
(86) International application number: PCT/JP2023/008419
(87) International publication number: WO 2023/189255

(56) References cited:
- EP-A1- 3 996 245
- WO-A1-2022/039181
- WO-A1-95/12237
- JP-A- 2008 211 868
- JP-A- 2020 006 916
- JP-A- 2020 175 737
- KR-B1- 101 803 917
- US-A1- 2019 173 324
- US-A1- 2020 174 052

## Description

### BACKGROUND

### 1. TECHNICAL FIELD

The present invention relates to a power feed management device, a program, a system, a flight vehicle, and a method.

### 2. RELATED ART

Japanese Patent Application Publication No. 2020-006916 describes a management device capable of making an unmanned flight vehicle fly stably and easily, by creating a flight path using a range of a land lot in which a railroad track is provided and which is possessed by a railroad operator. Japanese Patent Application Publication No. 2019-129678 describes a power transmission device which wirelessly transmits power to electronic equipment. US 2020/174052 A1 describes a radio wave measurement system which includes: an aerial moving body to move or to hover above a measurement target antenna for radiating a radio wave in a sky direction; and a position measurer to measure a time added position of the aerial moving body. The aerial moving body includes a measurement antenna to receive the radio wave and a radio wave measurer to measure time-added received radio wave data. The aerial moving body further includes a beam shape data generator to generate radiated radio wave data including the received radio wave data and the radio wave source relative position data representing measurement point data that is a position of the aerial moving body at a point of time when the received radio wave data is measured as a relative position with respect to the measurement target antenna. From KR 101 803 917 B1 a wireless charging system for a unmanned aerial vehicle including a charging station and a unmanned aerial vehicle to be charged wirelessly is known, and more particularly a wireless charging system in which a unmanned aerial vehicle detects and charges a charging station through radio waves. The wireless charging system wirelessly transmits the detection signal of the charging station and receives the response signal from at least one charging station to select the charging station to be charged through the intensity of the radio wave to move to the selected charging station. A plurality of antennas are disposed at intervals of a predetermined distance or more and receive a charging station detection radio wave from the unmanned aerial vehicle to transmit a response radio wave including current position information to the unmanned aerial vehicle when the unmanned air vehicle is detected within a predetermined radius. WO 2022/039181 A1 describes a flying mobile body comprises: a rotary wing that rotates and generates lift; a fuselage to which the rotary wing is provided; a power reception antenna having a larger area than the area in which the fuselage is projected on a rotation axis vertical plane that is a plane perpendicular to a rotation axis direction, which is the direction parallel to the rotation axis of the rotary wing, the power reception antenna having a power reception surface that receives radio waves for transmitting electric power, and a resistance reduction structure for reducing the resistance generated against a downward air current generated by the rotation of the rotary wing; a converter that converts the electric power of the radio waves received by the power reception antenna into DC electric power; a storage battery in which the DC electric power is stored; and an electric motor to which the DC electric power converted by the converter, or the DC electric power stored in the storage battery, is supplied, the electric motor generating drive power for rotating the rotary wing.

### GENERAL DISCLOSURE

The invention is defined by the independent claims. Embodiments of the invention are defined by the dependent claims. According to an embodiment of the present invention, a power feed management device is provided. The power feed management device includes an installation position information storage unit which stores installation position information indicating an installation position of each of a plurality of power feeding devices, each of which has a function of wirelessly feeding power to a flight vehicle by irradiating, with a beam, a power generation panel mounted on the flight vehivle, and a captured image captured by an imaging unit mounted on each of the plurality of power feeding devices.

The power feed management device includes an information acquisition unit which acquires flight position information indicating a flight position of the flight vehicle. The power feed management device includes a control unit which controls at least one power feeding device among the plurality of power feeding devices, such that the flight vehicle is wirelessly fed with power from the at least one power feeding device while the flight vehicle is flying, based on the flight position information and the installation position information.

The control unit controls a power feeding device which wirelessly feeds power to the flight vehicle, such that the flight vehicle is continuously wirelessly fed with power from the at least one power feeding device while the flight vehicle is flying, by switching the power feeding device which wirelessly feeds power to the flight vehicle from one power feeding device among the plurality of power feeding devices to another power feeding device among the plurality of power feeding devices. The control unit may control the power feeding device which wirelessly feeds power to the flight vehicle, such that the power feeding device which wirelessly feeds power to the flight vehicle is switched at a predetermined switching position from the one power feeding device to the another power feeding device. The control unit may control the power feeding device which wirelessly feeds power to the flight vehicle, such that the power feeding device which wirelessly feeds power to the flight vehicle is switched at a predetermined switching moment from the one power feeding device to the another power feeding device.

When the power feeding device which wirelessly feeds power to the flight vehicle is switched from the one power feeding device to the another power feeding device, the control unit may control the another power feeding device so as to increase a power feed amount of power wirelessly fed by the another power feeding device to the flight vehicle, in response to a decrease in a power feed amount of power wirelessly fed by the one power feeding device to the flight vehicle. When the power feeding device which wirelessly feeds power to the flight vehicle mounted with a plurality of power generation panel, each being identical to the power generation panel, is switched from the one power feeding device to the another power feeding device, the control unit may control the another power feeding device such that the another power feeding device irradiates, with a beam, the power generation panel different from the power generation panel irradiated with a beam by the one power feeding device.

When the power feeding device which wirelessly feeds power to the flight vehicle is switched from the one power feeding device to the another power feeding device, the control unit may control the flight vehicle such that the power generation panel has an orientation that allows a larger power feed amount of power to be wirelessly fed from the another power feeding device. The information acquisition unit may further acquire flight direction information indicating a flight direction of the flight vehicle. Based on the flight direction information, the control unit may control the flight vehicle such that the power generation panel has an orientation that allows air resistance received by the power generation panel to be smaller, and controls the at least one power feeding device such that a beam of the at least one power feeding device has a shape that allows the flight vehicle to be wirelessly fed with a larger power feed amount of power.

The information acquisition unit may further acquire flight plan information indicating a flight plan of the flight vehicle. The power feed management device may include a usage schedule information storage unit which stores usage schedule information indicating a usage schedule of each of the plurality of power feeding devices. The power feed management device may include a power feed plan creation unit which creates a power feed plan for the flight vehicle so as to satisfy a predetermined power feed condition, based on the flight plan information and the usage schedule information. The power feed management device may include an information transmission unit which transmits notification information when the power feed plan creation unit cannot create the power feed plan for the flight vehicle. The control unit may control the at least one power feeding device to wirelessly feed power to the flight vehicle in accordance with the power feed plan created by the power feed plan creation unit.

The power feed plan creation unit may create the power feed plan for the flight vehicle such that a flight period in which the flight vehicle flying in accordance with the flight plan flies in a state of not being wirelessly fed with power is shorter than a predetermined flight period threshold. The power feed plan creation unit may create the power feed plan for the flight vehicle such that there is no flight period in which the flight vehicle flying in accordance with the flight plan flies in the state of not being wirelessly fed with power. The power feed plan creation unit may create the power feed plan for the flight vehicle such that a flight distance which the flight vehicle flying in accordance with the flight plan flies in the state of not being wirelessly fed with power is shorter than a predetermined flight distance threshold.

The information acquisition unit may further acquire flight plan information indicating a changed flight plan of the flight vehicle when the flight plan of the flight vehicle is changed while the flight vehicle is flying in accordance with the flight plan. The power feed plan creation unit may change the power feed plan for the flight vehicle so as to satisfy the power feed condition, based on the flight plan information indicating the changed flight plan of the flight vehicle and the usage schedule information. The information transmission unit may transmit the notification information for notifying cancellation of flight according to the flight plan of the flight vehicle when the power feed plan creation unit cannot change the power feed plan for the flight vehicle.

According to an embodiment of the present invention, a program which causes a computer to function as the power feed management device may be provided.

According to an embodiment of the present invention, a system may be provided. The system may include the power feed management device. The system may include the plurality of power feeding devices.

The system may include the flight vehicle. The flight vehicle may include a mounting portion on which the power generation panel is mounted. The flight vehicle may include an installation position information storage unit which stores the installation position information. The flight vehicle may include a flight position information acquisition unit which acquires the flight position information. The flight vehicle may include a switching information reception unit which receives switching information indicating that a power feeding device which wirelessly feeds power to the flight vehicle is switched from one power feeding device among the plurality of power feeding devices to another power feeding device among the plurality of power feeding devices. The flight vehicle may include a control unit which controls, in response to reception of the switching information, the flight vehicle such that the power generation panel has an orientation that allows a larger power feed amount of power to be wirelessly fed from the another power feeding device, based on the flight position information and the installation position information.

According to an embodiment of the present invention, a flight vehicle may be provided. The flight vehicle may include a mounting portion on which a power generation panel is mounted. The flight vehicle may include an installation position information storage unit which stores installation position information indicating an installation position of each of a plurality of power feeding devices, each of which has a function of wirelessly feeding power to the flight vehicle by irradiating the power generation panel with a beam. The flight vehicle may include a flight position information acquisition unit which acquires flight position information indicating a flight position of the flight vehicle. The flight vehicle may include a switching information reception unit which receives switching information indicating that a power feeding device which wirelessly feeds power to the flight vehicle is switched from one power feeding device among the plurality of power feeding devices to another power feeding device among the plurality of power feeding devices. The flight vehicle may include a control unit which controls, in response to reception of the switching information, the flight vehicle such that the power generation panel has an orientation that allows a larger power feed amount of power to be wirelessly fed from the another power feeding device, based on the flight position information and the installation position information.

According to an embodiment of the present invention, a program which causes a computer to function as the flight vehicle may be provided.

According to an embodiment of the present invention, a method which is executed by a computer may be provided. The method may include acquiring information by acquiring flight position information indicating a flight position of a flight vehicle and by capturing an image with an imaging unit mounted on each of a plurality of power feeding devices. The method may include controlling at least one power feeding device among the plurality of power feeding devices, each of which has a function of wirelessly feeding power to the flight vehicle by irradiating, with a beam, a power generation panel mounted on the flight vehicle, such that the flight vehicle is wirelessly fed with power from the at least one power feeding device while the flight vehicle is flying, based on the flight position information and installation position information stored in the computer and indicating an installation position of each of the plurality of power feeding devices. The method may further include controlling one power feeding device among the plurality of power feeding devices based on the installation position of the one power feeding device and a tracking result obtained by tracking a position of the power generation panel using the flight position of the flight vehicle and the captured image, such that the one power feeding device continues to irradiate the power generation panel with the beam; controlling the one power feeding device and another power feeding device among the plurality of power feeding devices such that wireless power feeding to the flight vehicle is switched from the one power feeding device to the other power feeding device in response to a distance from the flight vehicle to the other power feeding device becoming shorter than a predetermined distance due to a flight of the flight vehicle approaching the other power feeding device; and controlling the other power feeding device, after the switching of the wireless power feeding, based on the installation position of the other power feeding device and the tracking result, such that the other power feeding device continues to irradiate the power generation panel with the beam.

According to an embodiment of the present invention, a method which is executed by a computer may be provided. The method may include acquiring flight position information indicating a flight position of a flight vehicle. The method may include receiving switching information indicating that a power feeding device which wirelessly feeds power to the flight vehicle is switched from one power feeding device among a plurality of power feeding devices, each of which has a function of wirelessly feeding power to the flight vehicle by irradiating a power generation panel of the flight vehicle with a beam, to another power feeding device among the plurality of power feeding devices. The method may include controlling, in response to reception of the switching information, an orientation of the power generation panel such that a larger power feed amount of power is wirelessly fed from the another power feeding device, based on the flight position information and installation position information stored in the computer and indicating an installation position of each of the plurality of power feeding devices.

The summary clause does not necessarily describe all necessary features of the embodiments of the present invention. The present invention may also be a sub-combination of the features described above.

### BRIEF DESCRIPTION OF THE DRAWINGS

Fig. 1 schematically shows an example of a system 10.
Fig. 2 is an explanatory diagram for explaining an example of a processing flow of the system 10.
Fig. 3 schematically shows another example of the system 10.
Fig. 4 is a top view of an example of a flight vehicle 100.
Fig. 5 is a front view of an example of the flight vehicle 100.
Fig. 6 is a front view of another example of the flight vehicle 100.
Fig. 7 is a front view of still another example of the flight vehicle 100.
Fig. 8 is a front view of still another example of the flight vehicle 100.
Fig. 9 is a front view of still another example of the flight vehicle 100.
Fig. 10 is a front view of still another example of the flight vehicle 100.
Fig. 11 is a front view of still another example of the flight vehicle 100.
Fig. 12 is a front view of still another example of the flight vehicle 100.
Fig. 13 schematically shows an example of a functional configuration of a power feed management device 400.
Fig. 14 schematically shows an example of a functional configuration of the flight vehicle 100.
Fig. 15 is an explanatory diagram for explaining an example of a processing flow of the power feed management device 400.
Fig. 16 is an explanatory diagram for explaining another example of the processing flow of the power feed management device 400.
Fig. 17 schematically shows an example of a hardware configuration of a computer 1200 that functions as the flight vehicle 100 and the power feed management device 400.

### DESCRIPTION OF EXEMPLARY EMBODIMENTS

When a current drone flies by using electric power accumulated in a battery in a state where power feed is not performed, the drone can fly continuously only for about 30 minutes, and thus, it is difficult to use the drone for tasks such as transportation. For example, a system 10 according to an embodiment creates a "drone path" where a plurality of laser light transmission systems cooperate to continue transmitting electric power to the solar panel of the drone. This enables long-distance transportation or the like using a drone.

Hereinafter, the present invention will be described through embodiments of the invention, but the following embodiments do not limit the invention according to claims. In addition, not all of the combinations of features described in the embodiments are essential to the solution of the invention.

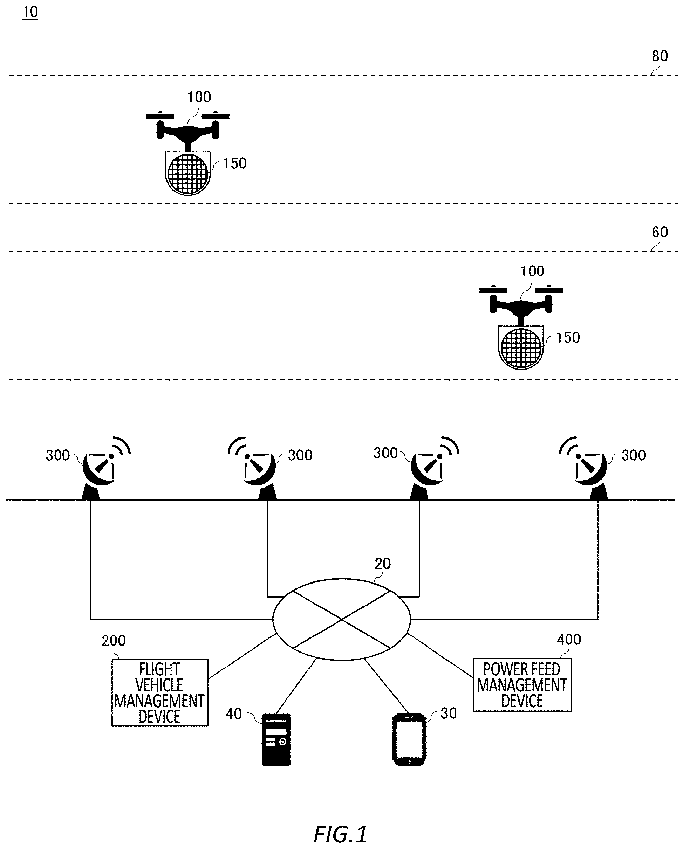

Fig. 1 schematically shows an example of the system 10. The system 10 may include a plurality of power feeding devices 300 and a power feed management device 400. The system 10 may include a flight vehicle 100. The system 10 may include a flight vehicle management device 200. The system 10 may include an information processing terminal 40.

The system 10 may be used for a service of using the flight vehicle 100 to convey a conveyance object to a destination. The conveyance object of the flight vehicle 100 may be, for example, an item. In this case, the system 10 may be used for a delivery service for items, for example. The conveyance object of the flight vehicle 100 may be a person. In this case, the system 10 may be used for a so-called flying taxi service, for example.

The flight vehicle 100 may include a power generation panel 150 and a battery (not shown). The power generation panel 150 may be, for example, a solar panel. The battery may accumulate electric power generated by the power generation panel 150. The flight vehicle 100 may fly by using the electric power accumulated in the battery.

The flight vehicle 100 may have, for example, a function of accessing a network 20. The flight vehicle 100 may access the network 20 via a base station on the ground, for example. The flight vehicle 100 may access the network 20 via a high altitude platform station (HAPS), for example. The flight vehicle 100 may access the network 20 via a communication satellite.

The network 20 may include a core network provided by a communication operator. The core network may be compliant with a 5G (5th Generation) communication system, for example. The core network may be compliant with a mobile communication system of a 6G (6th Generation) communication system onwards. The core network may be compliant with a 3G (3rd Generation) communication system. The core network may be compliant with an LTE (Long Term Evolution) communication system. The network 20 may include the Internet.

The flight vehicle 100 may have, for example, a function of acquiring flight position information indicating a flight position of the flight vehicle 100. The flight vehicle 100 may acquire the flight position information by using, for example, a global navigation satellite system (GNSS) function. The flight vehicle 100 may acquire the flight position information by using, for example, a global positioning system (GPS) function.

The flight position information may include, for example, longitude information indicating the longitude of the flight vehicle 100. The flight position information may include, for example, latitude information indicating the latitude of the flight vehicle 100. The flight position information may include, for example, altitude information indicating the altitude of the flight vehicle 100.

The flight vehicle 100 may be any flight vehicle as long as the flight vehicle can convey a conveyance object. The flight vehicle 100 may be, for example, an unmanned aircraft. The flight vehicle 100 may be a so-called drone. The flight vehicle 100 may be a manned aircraft. The flight vehicle 100 may be a glider. In this case, the power generation panel 150 may be mounted on the lower surface of the wing of the glider. The flight vehicle 100 may be a flying vehicle.

The flight vehicle management device 200 may manage the flight vehicle 100. For example, the flight vehicle management device 200 may manage the flight of the flight vehicle 100. For example, the flight vehicle management device 200 may manage the flight plan of the flight vehicle 100.

The flight vehicle management device 200 may manage the flight of the flight vehicle 100, for example, by controlling the flight of the flight vehicle 100. For example, the flight vehicle management device 200 may control the flight of the flight vehicle 100 such that the flight vehicle 100 flies along a flight path 60. For example, the flight vehicle management device 200 may control the flight of the flight vehicle 100 such that the flight vehicle 100 flies along a flight path 80. For example, the flight vehicle management device 200 may control the flight of the flight vehicle 100 such that the flight vehicle 100 flies in accordance with the flight plan of the flight vehicle 100.

For example, the flight vehicle management device 200 may control the flight of the flight vehicle 100 by transmitting a flight vehicle control signal for controlling the flight vehicle 100 to the flight vehicle 100 via the network 20. The flight vehicle 100 may fly in accordance with the flight vehicle control signal received from the flight vehicle management device 200 via the network 20.

When the flight vehicle 100 is a flight vehicle which autonomously flies, the flight vehicle management device 200 may control the flight of the flight vehicle 100 by transmitting flight plan information indicating the flight plan of the flight vehicle 100 to the flight vehicle 100 via the network 20. The flight vehicle 100 may autonomously fly in accordance with the flight plan information received from the flight vehicle management device 200 via the network 20.

The flight path 60 and the flight path 80 may be parallel in a vertical direction, for example. The flight path 60 and the flight path 80 may be parallel in a horizontal direction.

For example, the flight direction of the flight vehicle 100 on the flight path 60 may be the same direction as the flight direction of the flight vehicle 100 in the flight path 80. The flight direction of the flight vehicle 100 on the flight path 60 may be opposite to the flight direction of the flight vehicle 100 on the flight path 80.

The power feeding device 300 may have a function of wirelessly feeding power to the flight vehicle 100. For example, the power feeding device 300 may wirelessly feed power to the flight vehicle 100 by irradiating, with a beam, the power generation panel 150 mounted on the flight vehicle 100.

The power feeding device 300 may be installed, for example, on the ground. The power feeding device 300 may be installed, for example, in a building such as an office building. The power feeding device 300 may be installed in a moving body such as a vehicle, a ship, or a train.

The power feeding device 300 may be installed, for example, with a space from another power feeding device 300. The power feeding device 300 may be installed, for example, at a certain interval from another power feeding device 300. The power feeding device 300 may be installed, for example, with an interval of about 1 km from another power feeding device 300. The power feeding device 300 may be installed at the same point as another power feeding device 300.

The power feeding device 300 may have, for example, a function of wirelessly communicating with the flight vehicle 100. The wireless communication between the power feeding device 300 and the flight vehicle 100 may be compliant with, for example, a wireless communication system such as Wi-Fi (registered trademark), Bluetooth (registered trademark), or ZigBee (registered trademark). The power feeding device 300 may wirelessly communicate with the flight vehicle 100 via the network 20.

The flight vehicle 100 which is subject to wireless power feed by the power feeding device 300 may be, for example, the flight vehicle 100 which flies along the flight path 60. The flight vehicle 100 which is subject to wireless power feed by the power feeding device 300 may be, for example, the flight vehicle 100 which flies along the flight path 80. The flight vehicle 100 which is subject to wireless power feed by the power feeding device 300 may be, for example, the flight vehicle 100 which flies along the flight path 60 and the flight vehicle 100 which flies along the flight path 80.

The power feed management device 400 may manage a plurality of power feeding devices 300. For example, the power feed management device 400 may manage the power feed of the plurality of power feeding devices 300.

The power feed management device 400 may manage the power feed of the plurality of power feeding devices 300, for example, by controlling the plurality of power feeding devices 300. For example, the power feed management device 400 may control the power feeding device 300 which wirelessly feeds power to the flight vehicle 100, such that the flight vehicle 100 is wirelessly fed with power from at least one power feeding device 300 among the plurality of power feeding devices 300 while the flight vehicle 100 is flying.

The power feed management device 400 may control the power feeding device 300 which wirelessly feeds power to the flight vehicle 100 based on the installation position of each of the plurality of power feeding devices 300, the flight position of the flight vehicle 100, and a captured image obtained by imaging the flight vehicle 100. In particular, the power feed management device 400 may control the power feeding device 300 based on a tracking result obtained by tracking the position of the power generation panel 150 of the flight vehicle 100 using the flight position and the captured image.

The captured image may be, for example, a captured image captured by an imaging unit mounted on the power feeding device 300. The power feed management device 400 may receive the captured image from the power feeding device 300 via the network 20, and may store the captured image in the information storage unit used for controlling switching and continued irradiation by the plurality of power feeding devices.

The captured image may be, for example, a still image. The captured image may be a moving image.

For example, the power feed management device 400 may transmit a power feeding device control signal for controlling the power feeding device 300, to the power feeding device 300 via the network 20. The power feeding device 300 may wirelessly feed power to the flight vehicle 100 in accordance with the power feeding device control signal received from the power feed management device 400 via the network 20.

The power feed management device 400 may have the function of the flight vehicle management device 200. That is, the flight vehicle management device 200 and the power feed management device 400 may be integrated.

The communication terminal 30 may be a terminal possessed by a user of the system 10 who requests conveyance of the conveyance object. The information processing terminal 40 may be a terminal possessed by a user of the system 10 to whom the conveyance of the conveyance object is requested.

The communication terminal 30 and the information processing terminal 40 may be any terminals as long as the terminals can access the network 20. For example, the communication terminal 30 and the information processing terminal 40 may be a mobile phone such as a smartphone, a tablet terminal, a wearable terminal, or the like. The communication terminal 30 and the information processing terminal 40 may be a personal computer (PC).

When the current flight vehicle flies by using the electric power accumulated in the battery, the continuous flight time of the flight vehicle is about 30 minutes. Further, when the flight vehicle conveys a heavy conveyance object or when the flight vehicle flies at a high speed, the continuous flight time of the flight vehicle is further shortened. Therefore, in order to realize a service of using the flight vehicle to convey the conveyance object over a long distance, it is necessary to feed power to the flight vehicle while the flight vehicle is flying.

According to the system 10 according to an embodiment, the power feed management device 400 controls the power feeding device 300 which wirelessly feeds power to the flight vehicle 100 such that the flight vehicle 100 is wirelessly fed with power from at least one power feeding device 300 among the plurality of power feeding devices 300 while the flight vehicle 100 is flying, based on the installation position of each of the plurality of power feeding devices 300 and the flight position of the flight vehicle 100. Accordingly, since the system 10 according to an embodiment can wirelessly feed power to the flight vehicle 100 while the flight vehicle 100 is flying, it is possible to realize a service of using the flight vehicle 100 to convey the conveyance object over a long distance.

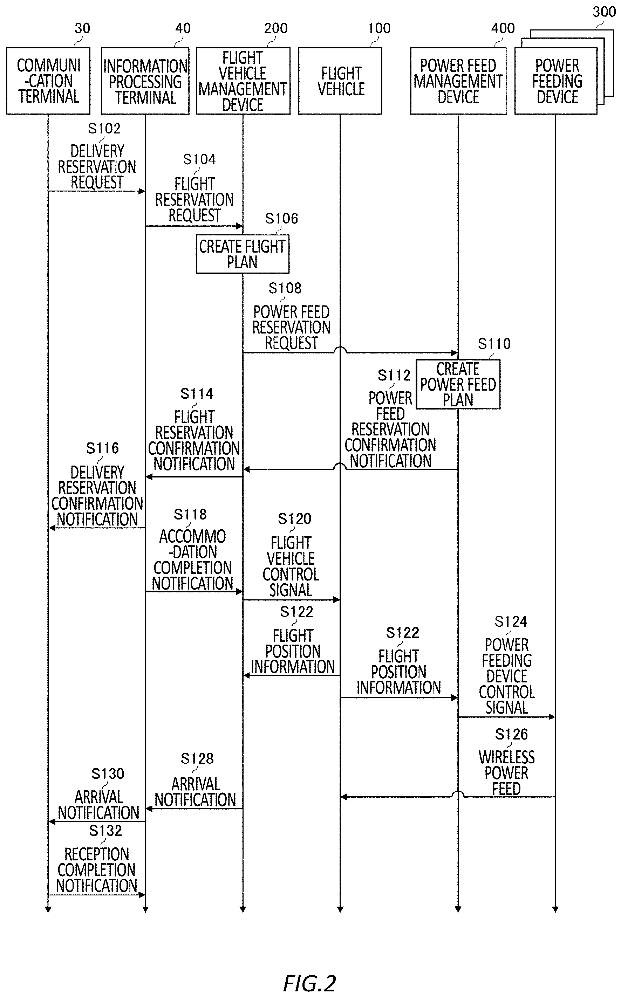

Fig. 2 is an explanatory diagram for explaining an example of a processing flow of the system 10. In Fig. 2, an example in which the system 10 is used for a delivery service of a delivery pizza chain will be mainly described.

In step (the step may be abbreviated as S) 102, the communication terminal 30 may receive an input of a delivery reservation of a product from a user who is a possessor of the communication terminal 30. The delivery reservation may include, for example, the type and number of products desired to be delivered. The delivery reservation may include, for example, a desired delivery moment. The delivery reservation may include an address of the delivery destination. The communication terminal 30 may transmit the received delivery reservation as a delivery reservation request via the network 20 to the information processing terminal 40 possessed by the delivery pizza chain.

In S104, based on the delivery reservation request received from the communication terminal 30 in S102, the information processing terminal 40 may create a flight reservation of the flight vehicle 100 in order to use the flight vehicle 100 to deliver the product to the user. The information processing terminal 40 may transmit the created flight reservation as a flight reservation request to the flight vehicle management device 200 via the network 20. Here, the description will be continued assuming that the flight vehicle 100 is arranged in each store of the delivery pizza chain.

The flight reservation may include, for example, the destination point of the flight vehicle 100. The destination point may be, for example, an address of the delivery destination included in the delivery reservation request. The destination point may be an address of a delivery destination registered in the information processing terminal 40 in association with the identification information of the user. The flight reservation may include, for example, a departure point of the flight vehicle 100. The departure point may be, for example, a store closest to the address of the delivery destination. The flight reservation may include, for example, a scheduled destination point arrival moment which is a scheduled moment when the flight vehicle 100 arrives at the destination point. The scheduled destination point arrival moment may be, for example, a desired delivery moment included in the delivery reservation request. The flight reservation may include the total weight of the conveyance object to be conveyed by the flight vehicle 100.

In S106, the flight vehicle management device 200 may create a flight plan of the flight vehicle 100 based on the flight reservation request received from the information processing terminal 40 in S104. The flight vehicle management device 200 may create the flight plan of the flight vehicle 100 further based on flight vehicle performance information indicating the performance of the flight vehicle 100.

The flight plan may include, for example, the destination point of the flight vehicle 100. The flight plan may include, for example, the departure point of the flight vehicle 100. The flight plan may include, for example, a flight path along which the flight vehicle 100 flies from the departure point to the destination point. The flight plan may include, for example, the scheduled destination point arrival moment of the flight vehicle 100. The flight plan may include, for example, an allowable delay time from the scheduled destination point arrival moment. The flight plan may include, for example, a scheduled departure moment that is a scheduled moment at which the flight vehicle 100 departs from the departure point. The flight plan may include, for example, the flight speed of the flight vehicle 100. The flight plan may include, for example, the flight altitude of the flight vehicle 100. The flight plan may include the total weight of the conveyance object to be conveyed by the flight vehicle 100.

In S108, the flight vehicle management device 200 may create a power feed reservation for the flight vehicle 100 in order to wirelessly feed power to the flight vehicle 100 while the flight vehicle 100 is delivering the product. The power feed reservation may include, for example, the flight plan created by the flight vehicle management device 200 in S106. The power feed reservation may include a power feed amount necessary for the flight vehicle 100 to deliver the product. The flight vehicle management device 200 may transmit the created power feed reservation as a power feed reservation request to the power feed management device 400 via the network 20.

In S110, the power feed management device 400 may create a power feed plan for the flight vehicle 100, based on the flight plan included in the power feed reservation request received from the flight vehicle management device 200 in S108 and the usage schedule of each of the plurality of power feeding devices 300. For example, the power feed management device 400 may create the power feed plan for the flight vehicle 100 so as to satisfy a predetermined power feed condition. Here, the description will be continued assuming that the power feed management device 400 can create the power feed plan for the flight vehicle 100 satisfying the power feed condition.

In S112, the power feed management device 400 may confirm the power feed plan for the flight vehicle 100 in response to the power feed plan for the flight vehicle 100 satisfying the power feed condition having been created in S110. Thereafter, the power feed management device 400 may notify the flight vehicle management device 200 that the power feed reservation has been confirmed, via the network 20.

In S114, the flight vehicle management device 200 may confirm the flight plan of the flight vehicle 100 in response to the reception of the notification from the power feed management device 400 in S112. Thereafter, the flight vehicle management device 200 may notify the information processing terminal 40 that the flight reservation has been confirmed, via the network 20.

In S116, the information processing terminal 40 may confirm the delivery reservation of the product in response to the reception of the notification from the flight vehicle management device 200 in S114. Thereafter, the information processing terminal 40 may notify the communication terminal 30 that the delivery reservation of the product has been confirmed, via the network 20. The information processing terminal 40 may notify, via the network 20, the information processing terminal of the store at the departure point of the flight vehicle 100 to create the product to be delivered.

The information processing terminal of the store at the departure point of the flight vehicle 100 may notify, via the network 20, the information processing terminal 40 of completion of a work of accommodating, in an accommodation portion included in the flight vehicle 100, the product to be delivered. Thereafter, in S118, the information processing terminal 40 may transmit the notification to the flight vehicle management device 200 via the network 20. The flight vehicle management device 200 may recognize that the flight vehicle 100 is in a state of being able to depart, in response to the reception of the notification from the information processing terminal 40.

In S120, the flight vehicle management device 200 may start the control of the flight of the flight vehicle 100 in response to the lapse of the scheduled departure moment of the flight vehicle 100. For example, the flight vehicle management device 200 may transmit the flight vehicle control signal to the flight vehicle 100 via the network 20 such that the flight vehicle 100 takes off from the departure point and flies along the flight path. The flight vehicle 100 may take off from the departure point and fly along the flight path in accordance with the flight vehicle control signal received from the flight vehicle management device 200.

In S122, the flight vehicle 100 delivering the product may acquire the flight position, and transmit, via the network 20 to the flight vehicle management device 200 and the power feed management device 400, flight position information indicating the acquired flight position of the flight vehicle 100. For example, the flight vehicle 100 may periodically transmit the flight position information of the flight vehicle 100 to the flight vehicle management device 200 and the power feed management device 400 while delivering the product. The flight vehicle management device 200 may control the flight of the flight vehicle 100 based on the flight position information received from the flight vehicle 100.

In S124, the power feed management device 400 may control the power feeding device 300 which wirelessly feeds power to the flight vehicle 100, based on the power feed plan for the flight vehicle 100 created in S110 and the flight position of the flight vehicle 100 indicated by the flight position information received from the flight vehicle 100 in S122. The power feed management device 400 may transmit the power feeding device control signal to the power feeding device 300 via the network 20, for example. In S126, in response to the reception of the power feeding device control signal from the power feed management device 400 in S124, the power feeding device 300 may wirelessly feed power to the flight vehicle 100 delivering the product in accordance with the power feeding device control signal.

In S128, in response to the flight vehicle 100 arriving near the destination point, the flight vehicle management device 200 may transmit the flight vehicle control signal to the flight vehicle 100 via the network 20 such that the flight vehicle 100 lands at the destination point. The flight vehicle 100 may land at the destination point in accordance with the flight vehicle control signal received from the flight vehicle management device 200. In response to the flight vehicle 100 landing at the destination point, the flight vehicle management device 200 may transmit, to the information processing terminal 40 via the network 20, an arrival notification for notifying that the flight vehicle 100 has arrived at the address of the delivery destination.

In S130, the information processing terminal 40 may transmit, to the communication terminal 30 via the network 20, the arrival notification received from the flight vehicle management device 200 in S128. Thereafter, the user who has checked the arrival notification with the communication terminal 30 may take out the product accommodated in the accommodation portion of the flight vehicle 100.

In S132, the communication terminal 30 may receive an input indicating the completion of the reception of the product from the user. The communication terminal 30 may transmit, to the information processing terminal 40 via the network 20, a reception completion notification for notifying the completion of the reception of the product. The information processing terminal 40 may transmit, to the flight vehicle management device 200 via the network 20, the reception completion notification received from the communication terminal 30. In response to receiving the reception completion notification from the information processing terminal 40, the flight vehicle management device 200 may control the flight vehicle 100 such that the flight vehicle 100 returns to the store which is the departure point. Accordingly, the processing of using the flight vehicle 100 to deliver the product to the user ends.

According to an example of the system 10 in Fig. 2, before the flight vehicle 100 flies in accordance with the flight plan, the power feed management device 400 creates the power feed plan for the flight vehicle 100 so as to satisfy the power feed condition, based on the flight plan of the flight vehicle 100 and the usage schedule of each of the plurality of power feeding devices. Then, the power feed management device 400 controls the power feeding device 300 which wirelessly feeds power to the flight vehicle 100, so as to wirelessly feed power to the flight vehicle 100 in accordance with the created power feed plan while the flight vehicle 100 is flying in accordance with the flight plan. Accordingly, according to an example of the system 10 in Fig. 2, it is possible to prevent in advance a situation in which the flight vehicle 100 which delivers a product in accordance with the flight plan cannot be wirelessly fed with power. Therefore, as the whole system 10, the system 10 of Fig. 2 can stably wirelessly feed power to the flight vehicle 100 flying in accordance with the flight plan.

In the processing flow shown in Fig. 2, when the power feed management device 400 cannot create the power feed plan for the flight vehicle 100 satisfying the power feed condition in S110, S112 may be replaced with processing in which the power feed management device 400 notifies, via the network 20, the flight vehicle management device 200 that the power feed reservation cannot be made. In this case, in response to the reception of the notification from the power feed management device 400, the flight vehicle management device 200 may change the flight plan within a range in which the delivery reservation is not changed. For example, the flight vehicle management device 200 may change the flight path of the flight vehicle 100. For example, the flight vehicle management device 200 may change the flight speed of the flight vehicle 100. The flight vehicle management device 200 may change the scheduled departure moment. The flight vehicle management device 200 may re-create the power feed reservation including the changed flight plan and transmit the re-created power feed reservation to the power feed management device 400 via the network 20.

When the flight plan cannot be changed within the range in which the delivery reservation is not changed, the flight vehicle management device 200 may notify, via the network 20, the information processing terminal 40 that the flight reservation cannot be made. In response to the reception of the notification from the flight vehicle management device 200, the information processing terminal 40 may transmit a delivery reservation change request for requesting a change in the delivery reservation, to the communication terminal 30 via the network 20. The user who has checked the delivery reservation change request with the communication terminal 30 may change the delivery reservation. The communication terminal 30 may receive the input of the change in the delivery reservation from the user and transmit the changed delivery reservation to the information processing terminal 40 via the network 20. The information processing terminal 40 may re-create the flight reservation based on the changed delivery reservation and transmit the re-created flight reservation to the flight vehicle management device 200 via the network 20.

In the processing flow shown in Fig. 2, the communication terminal 30 may further include processing of transmitting, to the information processing terminal 40 via the network 20, a flight position acquisition request for requesting the flight position of the flight vehicle 100 delivering the product. In this case, the information processing terminal 40 may receive the flight position information of the flight vehicle 100 from the flight vehicle management device 200 via the network 20 in response to the reception of the flight position acquisition request from the communication terminal 30. The information processing terminal 40 may transmit the received flight position information of the flight vehicle 100 to the communication terminal 30. The communication terminal 30 may provide the user with the flight position of the flight vehicle 100 indicated by the flight position information received from the information processing terminal 40.

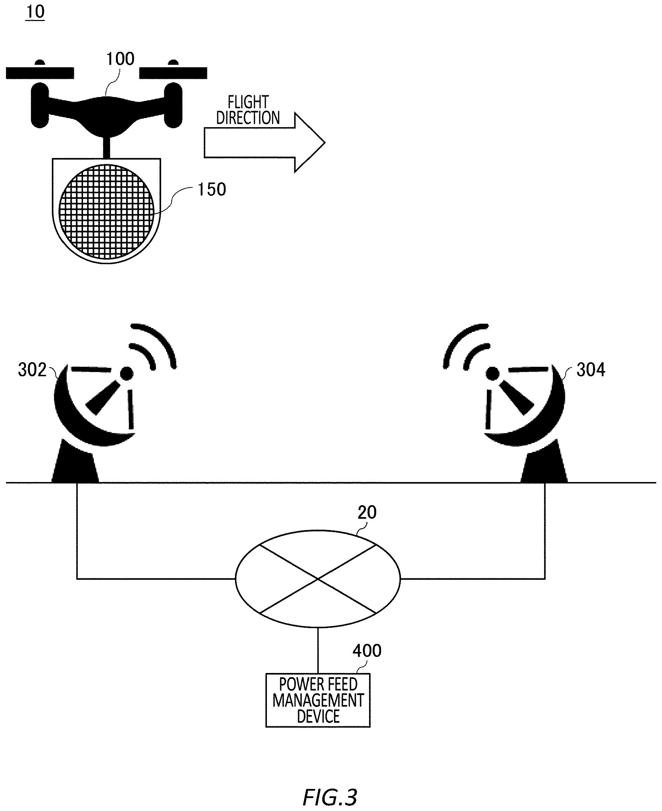

Fig. 3 schematically shows another example of the system 10. In Fig. 3, an example of a case where the power feed management device 400 switches the power feeding device, which wirelessly feeds power to the flight vehicle 100, from a power feeding device 302 to a power feeding device 304 will be mainly described. Here, a state where the power feeding device 302 wirelessly feeds power to the flight vehicle 100 will be described as a start state.

The flight vehicle 100 may fly in a flight direction approaching the power feeding device 304. The power feed management device 400 may control the power feeding device 302 such that the power feeding device 302 wirelessly feeds power to the flight vehicle 100, based on the flight position of the flight vehicle 100, the captured image obtained by imaging the flight vehicle 100, and the installation position of the power feeding device 302. For example, the power feed management device 400 may control the power feeding device 302 such that the power feeding device 302 continues to irradiate the power generation panel 150 with a beam, based on a tracking result, which is obtained by tracking the position of the power generation panel 150 by using the flight position and the captured image of the flight vehicle 100, and the installation position of the power feeding device 302.

Thereafter, the power feed management device 400 may control the power feeding device 302 and the power feeding device 304 such that the power feeding device which wirelessly feeds power to the flight vehicle 100 is switched from the power feeding device 302 to the power feeding device 304, in response to the flight vehicle 100 approaching the power feeding device 304 until a distance to the power feeding device 304 becomes shorter than a predetermined distance. Here, the description will be continued assuming that the power feeding device 302 and the power feeding device 304 can wirelessly feed power to the flight vehicle 100 at a switching position where the power feeding device which wirelessly feeds power to the flight vehicle 100 is switched from the power feeding device 302 to the power feeding device 304.

For example, the power feed management device 400 may control the power feeding device 304 such that the power feeding device 304 starts wirelessly feeding power to the flight vehicle 100, based on the flight position of the flight vehicle 100, the captured image obtained by imaging the flight vehicle 100, and the installation position of the power feeding device 304. The power feed management device 400 may end the wireless power feed of the power feeding device 302 in response to the power feeding device 304 starting the wireless power feed to the flight vehicle 100. Accordingly, the power feed management device 400 may switch the power feeding device, which wirelessly feeds power to the flight vehicle 100, from the power feeding device 302 to the power feeding device 304.

After switching the power feeding device, which wirelessly feeds power to the flight vehicle 100, from the power feeding device 302 to the power feeding device 304, the power feed management device 400 may control the power feeding device 304 such that the power feeding device 304 continues to irradiate the power generation panel 150 with a beam, based on the tracking result obtained by tracking the position of the power generation panel 150 and the installation position of the power feeding device 304. Accordingly, the power feed management device 400 can control the power feeding device 302 and the power feeding device 304 such that the flight vehicle 100 is continuously wirelessly fed with power while the flight vehicle 100 is flying in the sky above the power feeding device 302 and the power feeding device 304.

According to an example of the system 10 in Fig. 3, the power feed management device 400 can continuously wirelessly feed power to the flying flight vehicle 100 by switching the power feeding device wirelessly feeding power to the flight vehicle 100 while the flight vehicle 100 is flying. Accordingly, the example of the system 10 in Fig. 3 can further reduce a possibility that the battery remaining amount of the battery mounted on the flight vehicle 100 becomes insufficient when the conveyance object is conveyed for a long distance by using the flight vehicle 100. Further, according to the example of the system 10 in Fig. 3, the conveyance object can be conveyed for a long distance by using the flight vehicle 100 mounted with a battery having a small capacity. Since the battery having a small capacity is smaller in weight than a battery having a large capacity, the example of the system 10 of Fig. 3 can convey a conveyance object having a larger weight for a long distance by using the flight vehicle 100, as compared with a case where the conveyance object is conveyed for a long distance by using the flight vehicle mounted with the battery having a large capacity. Further, since the battery having a small capacity is cheaper than the battery having a large capacity, the example of the system 10 of Fig. 3 can convey a conveyance object for a long distance by using the cheaper flight vehicle 100, as compared with a case where the conveyance object is conveyed by using the flight vehicle mounted with the battery having a large capacity.

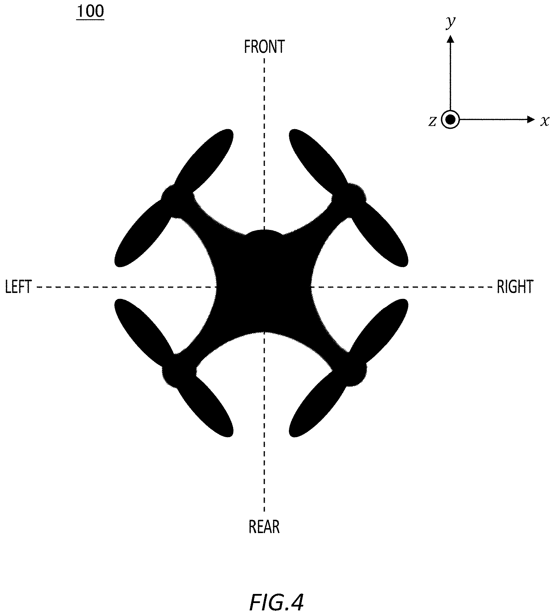

Fig. 4 is a top view of an example of the flight vehicle 100. As shown in Fig. 4, the right-left direction of the flight vehicle 100 may correspond to an x-axis direction, the front-rear direction of the flight vehicle 100 may correspond to a y-axis direction, and the up-down direction of the flight vehicle 100 may correspond to a z-axis direction.

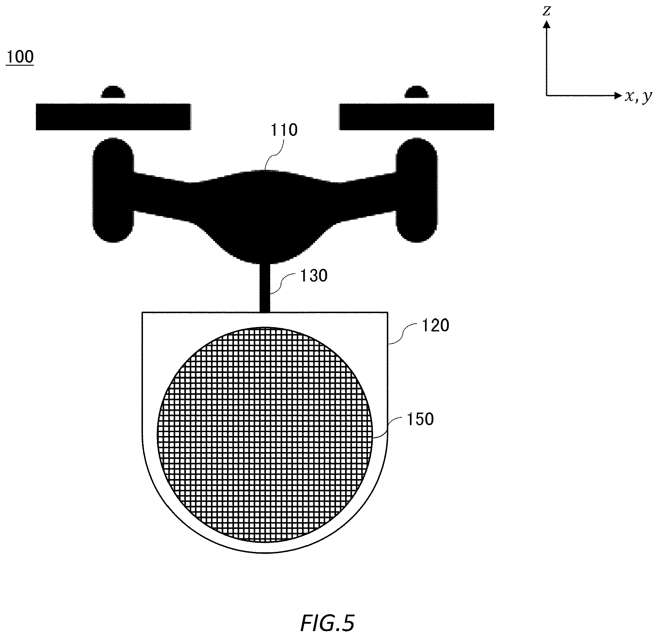

Fig. 5 is a front view of an example of the flight vehicle 100. The flight vehicle 100 may include an airframe 110, a mounting portion 120, a support shaft 130, and a power generation panel 150.

The power generation panel 150 may be mounted on the mounting portion 120. The mounting portion 120 may further mount a power generation panel on the surface opposite to the surface on which the power generation panel 150 is mounted. That is, the power generation panels may be mounted on both surfaces of the mounting portion 120.

For example, the mounting portion 120 may be connected to the airframe 110 via the support shaft 130 parallel to the up-down direction of the flight vehicle 100. For example, in the support shaft 130, one end may be connected to the lower portion of the airframe 110, and another end may be connected to the mounting portion 120.

For example, the power generation panel 150 may be mounted on the mounting portion 120 such that the orientation of the power generation panel 150 is perpendicular to the support shaft 130. The orientation of the power generation panel 150 may be the orientation of a normal vector perpendicular to power generation panel 150.

For example, the mounting portion 120 may be rotatable about the support shaft 130. In this case, the support shaft 130 may be a rotating support shaft. The flight vehicle 100 may control the orientation of the power generation panel 150 by controlling the angle of the mounting portion 120.

The mounting portion 120 may be directly connected to the lower portion of the airframe 110. In this case, the flight vehicle 100 may not include the support shaft 130.

The flight vehicle 100 may further include an accommodation portion which accommodates the conveyance object. For example, the flight vehicle 100 may include the accommodation portion in the upper portion of the airframe 110. The flight vehicle 100 may include the accommodation portion between the lower portion of the airframe 110 and the support shaft 130. In this case, in the support shaft 130, one end may be connected to the lower portion of the accommodation portion, and another end may be connected to the mounting portion 120.

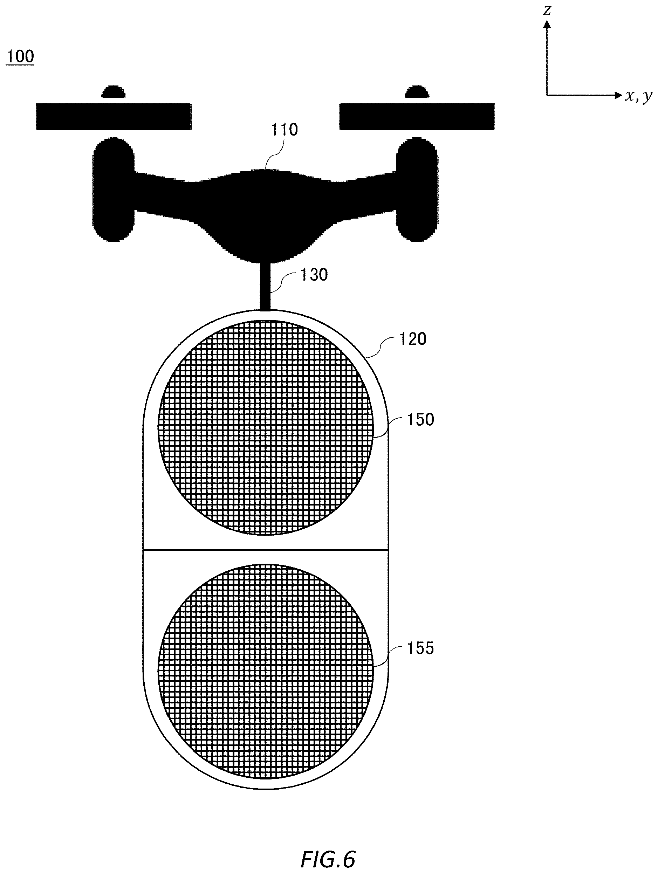

Fig. 6 is a front view of another example of the flight vehicle 100. In Fig. 6, portions different from those in Fig. 5 will be mainly described.

The flight vehicle 100 may further include a power generation panel 155. The power generation panel 155 may be, for example, the same power generation panel as the power generation panel 150. The power generation panel 155 may be a power generation panel different from the power generation panel 150.

The power generation panel 150 and the power generation panel 155 may be mounted on the mounting portion 120. In the mounting portion 120, a power generation panel may be further mounted on a surface opposite to the surface on which the power generation panel 150 and the power generation panel 155 are mounted.

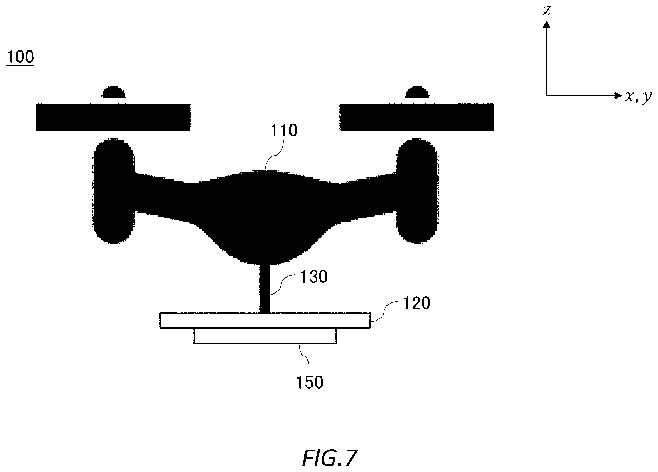

Fig. 7 is a front view of still another example of the flight vehicle 100. In Fig. 7, portions different from those in Figs. 5 and 6 will be mainly described.

For example, the power generation panel 150 may be mounted on the surface of the mounting portion 120 opposite to the surface to which the support shaft 130 is connected. For example, the power generation panel 150 may be mounted on the mounting portion 120 such that the orientation of the power generation panel 150 is parallel to the support shaft 130.

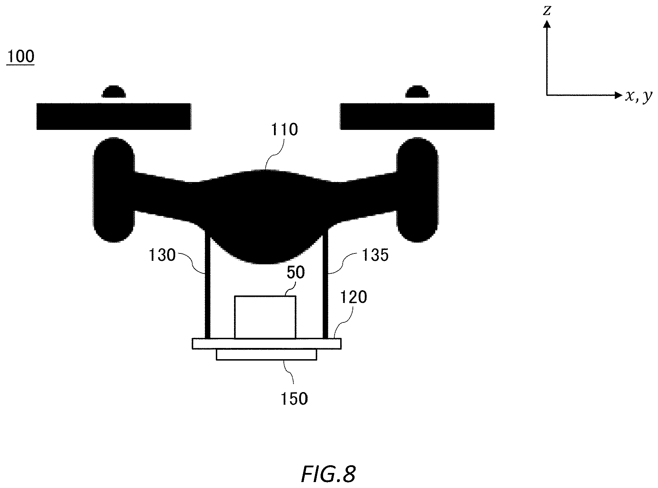

Fig. 8 is a front view of still another example of the flight vehicle 100. In Fig. 8, portions different from those in Figs. 5 to 7 will be mainly described.

The flight vehicle 100 may further include a support shaft 135. For example, the mounting portion 120 may be connected to the airframe 110 via the support shaft 130 and the support shaft 135 parallel to the up-down direction of the flight vehicle 100. For example, each of the support shaft 130 and the support shaft 135, one end may be connected to the lower portion of the airframe 110, and another end may be connected to the mounting portion 120.

For example, the power generation panel 150 may be mounted on the surface of the mounting portion 120 opposite to the surface to which the support shaft 130 and the support shaft 135 are connected. For example, the power generation panel 150 may be mounted on the mounting portion 120 such that the orientation of the power generation panel 150 is parallel to the support shaft 130 and the support shaft 135.

For example, the mounting portion 120 may include a fixing portion which fixes the conveyance object 50 to the surface to which the support shaft 130 and the support shaft 135 are connected. The fixing portion may be, for example, any fixing tool such as a belt, a bar, or a net.

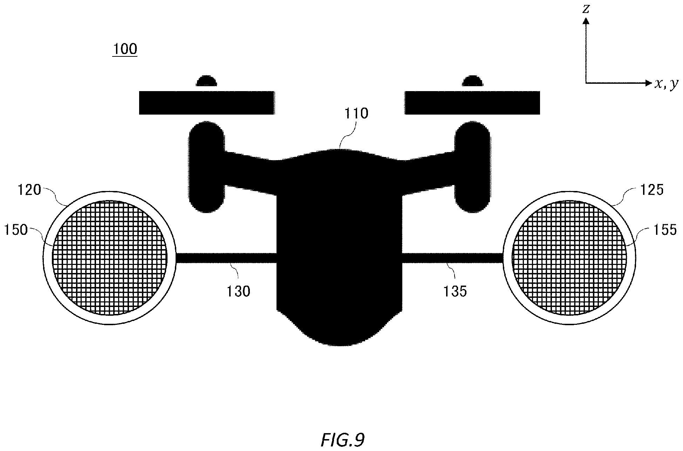

Fig. 9 is a front view of still another example of the flight vehicle 100. In Fig. 9, portions different from those in Figs. 5 to 8 will be mainly described.

The flight vehicle 100 may further include a mounting portion 125. The mounting portion 125 may have, for example, a function similar to that of the mounting portion 120.

The power generation panel 150 may be mounted on the mounting portion 120. For example, the mounting portion 120 may be connected to the airframe 110 via the support shaft 130 perpendicular to the up-down direction of the flight vehicle 100. For example, in the support shaft 130, one end may be connected to one side surface portion of the airframe 110, and another end may be connected to the mounting portion 120.

For example, the power generation panel 150 may be mounted on the mounting portion 120 such that the orientation of the power generation panel 150 is perpendicular to the support shaft 130. For example, the mounting portion 120 may be rotatable about the support shaft 130.

The power generation panel 155 may be mounted on the mounting portion 125. For example, the mounting portion 125 may be connected to the airframe 110 via the support shaft 135 perpendicular to the up-down direction of the flight vehicle 100. For example, in the support shaft 135, one end may be connected to another side surface portion of the airframe 110, and another end may be connected to the mounting portion 125.

For example, the power generation panel 155 may be mounted on the mounting portion 125 such that the orientation of the power generation panel 155 is perpendicular to the support shaft 135 of the flight vehicle 100. For example, the mounting portion 125 may be rotatable about the support shaft 135. In this case, the support shaft 135 may be a rotating support shaft.

For example, the flight vehicle 100 may include the accommodation portion in the upper portion of the airframe 110. For example, the flight vehicle 100 may include the accommodation portion in the lower portion of the airframe 110.

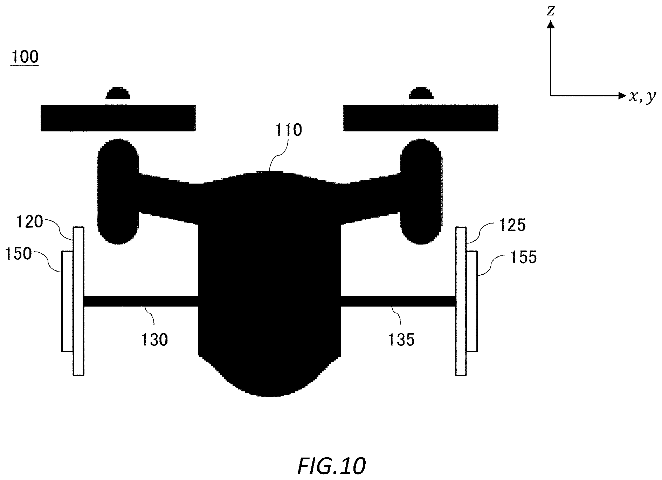

Fig. 10 is a front view of still another example of the flight vehicle 100. In Fig. 10, portions different from those in Figs. 5 to 9 will be mainly described.

For example, the power generation panel 150 may be mounted on the surface of the mounting portion 120 opposite to the surface to which the support shaft 130 is connected. For example, the power generation panel 150 may be mounted on the mounting portion 120 such that the orientation of the power generation panel 150 is parallel to the support shaft 130.

For example, the power generation panel 155 may be mounted on the surface of the mounting portion 125 opposite to the surface to which the support shaft 135 is connected. For example, the power generation panel 155 may be mounted on the mounting portion 125 such that the orientation of the power generation panel 155 is parallel to the support shaft 135.

The mounting portion 120 may be directly connected to one side surface portion of the airframe 110. In this case, the flight vehicle 100 may not include the support shaft 130. The mounting portion 125 may be directly connected to another side surface portion of the airframe 110. In this case, the flight vehicle 100 may not include the support shaft 135.

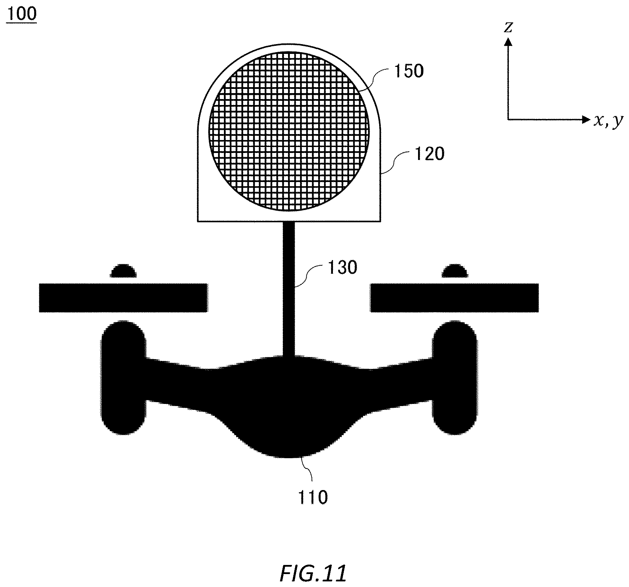

Fig. 11 is a front view of still another example of the flight vehicle 100. In Fig. 11, portions different from those in Figs. 5 to 10 will be mainly described.

For example, the mounting portion 120 may be connected to the airframe 110 via the support shaft 130 parallel to the up-down direction of the flight vehicle 100. For example, in the support shaft 130, one end may be connected to the upper portion of the airframe 110, and another end may be connected to the mounting portion 120.

For example, the power generation panel 150 may be mounted on the mounting portion 120 such that the orientation of the power generation panel 150 is perpendicular to the support shaft 130. For example, the mounting portion 120 may be rotatable about the support shaft 130.

The mounting portion 120 may be directly connected to the upper portion of the airframe 110. In this case, the flight vehicle 100 may not include the support shaft 130.

For example, the flight vehicle 100 may include the accommodation portion in the lower portion of the airframe 110. The flight vehicle 100 may include the accommodation portion between the upper portion of the airframe 110 and the support shaft 130. In this case, in the support shaft 130, one end may be connected to the upper portion of the accommodation portion, and another end may be connected to the mounting portion 120.

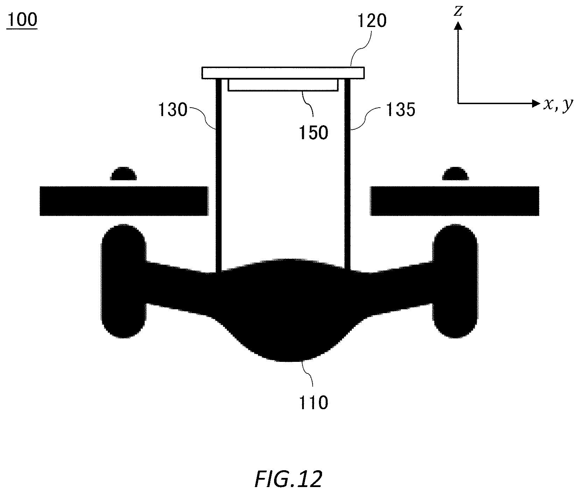

Fig. 12 is a front view of still another example of the flight vehicle 100. In Fig. 12, portions different from those in Figs. 5 to 11 will be mainly described.

For example, the mounting portion 120 may be connected to the airframe 110 via the support shaft 130 and the support shaft 135 parallel to the up-down direction of the flight vehicle 100. For example, in each of the support shaft 130 and the support shaft 135, one end may be connected to the upper portion of the airframe 110, and another end may be connected to the mounting portion 120.

For example, the power generation panel 150 may be mounted on the surface of the mounting portion 120 to which the support shaft 130 and the support shaft 135 are connected. For example, the power generation panel 150 may be mounted on the mounting portion 120 such that the orientation of the power generation panel 150 is parallel to the support shaft 130 and the support shaft 135.

For example, the flight vehicle 100 may include the accommodation portion in the lower portion of the airframe 110. The flight vehicle 100 may include the accommodation portion between the upper portion of the airframe 110, and the support shaft 130 and the support shaft 135. In this case, in each of the support shaft 130 and the support shaft 135, one end may be connected to the upper portion of the accommodation portion, and another end may be connected to the mounting portion 120.

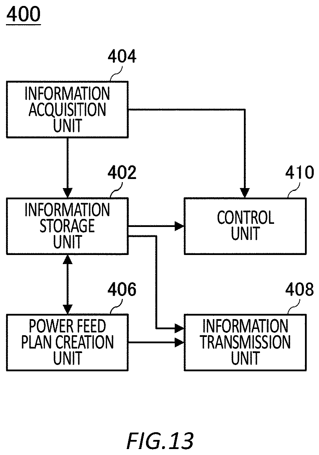

Fig. 13 schematically shows an example of a functional configuration of the power feed management device 400. The power feed management device 400 may include an information storage unit 402, an information acquisition unit 404, a power feed plan creation unit 406, an information transmission unit 408, and a control unit 410. Note that the power feed management device 400 is not necessarily required to have all these configurations.

The information storage unit 402 may store various types of information. For example, the information storage unit 402 may store installation position information indicating the installation position of each of the plurality of power feeding devices 300. For example, the information storage unit 402 may store the installation position information of the power feeding device 300 and installation region information indicating an installation region to which the installation position of the power feeding device 300 belongs in association with each other. The installation region may be classified, for example, by predetermined areas. The installation region may be classified, for example, by municipalities. The installation region may be classified by any other arbitrary units. For example, the information storage unit 402 may store the installation position information of the power feeding device 300 and the identification information of the imaging device installed around the power feeding device 300 in association with each other. The information storage unit 402 may be an example of the installation position information storage unit.

The information storage unit 402 may store, for example, a power amount threshold used for determining whether the amount of power used by the system 10 in the installation region is insufficient. The power amount threshold may be set based on, for example, the maximum amount of power which can be used by the system 10 in the installation region. The power amount threshold may be, for example, a power amount obtained by multiplying the maximum amount of power which can be used by the system 10 in the installation region by a predetermined ratio.

The information storage unit 402 may store, for example, power feeding device performance information indicating the performance of each of the plurality of power feeding devices 300. The power feeding device performance information may include, for example, beam number information indicating the number of beams which can be radiated by the power feeding device 300. The power feeding device performance information may include, for example, maximum power feed amount information indicating the maximum power feed amount of the power feeding device 300. The power feeding device performance information may include beam information indicating the beam radiated by the power feeding device 300. The beam radiated by the power feeding device 300 may be, for example, a laser beam. The beam radiated by the power feeding device 300 may be, for example, a millimeter wave beam. The beam radiated by the power feeding device 300 may be, for example, a microwave beam. The beam radiated by the power feeding device 300 may be any other arbitrary beam.

For example, the information storage unit 402 may store usage schedule information indicating the usage schedule of each of the plurality of power feeding devices 300. For example, when the power feeding device 300 includes a plurality of output units which output beams, the information storage unit 402 may store usage schedule information indicating the usage schedule of each of the plurality of output units of the power feeding device 300. For example, the information storage unit 402 may store the usage schedule information of each of the plurality of power feeding devices 300 for each installation region. The information storage unit 402 may be an example of the usage schedule information storage unit.

The information storage unit 402 may store the flight vehicle performance information of the flight vehicle 100. The flight vehicle performance information may include, for example, maximum flight speed information indicating the maximum flight speed of the flight vehicle 100. The flight vehicle performance information may include, for example, power generation panel number information indicating the number of the power generation panels 150 mounted on the flight vehicle 100. The flight vehicle performance information may include power generation performance information indicating the power generation performance of the power generation panel 150 mounted on the flight vehicle 100. The flight vehicle performance information may include, for example, power generation panel shape information indicating the shape of the power generation panel 150 mounted on the flight vehicle 100. The shape of the power generation panel 150 may be, for example, a circular shape. The shape of the power generation panel 150 may be, for example, a rectangular shape. The shape of the power generation panel 150 may be a square shape. The shape of the power generation panel 150 may be any other arbitrary shape. The flight vehicle performance information may include, for example, maximum capacity information indicating the maximum capacity of the battery mounted on the flight vehicle 100. The flight vehicle performance information may include flight vehicle type information indicating the type of the flight vehicle 100. The flight vehicle type information may be, for example, information indicating that the flight vehicle 100 is any one of the flight vehicles 100 shown in Figs. 5 to 12. The flight vehicle performance information may include, for example, flight vehicle weight information indicating the weight of the flight vehicle 100. The flight vehicle performance information may include, for example, conveyance object type information indicating the type of the conveyance object of the flight vehicle 100. The conveyance object type information may be, for example, information indicating that the conveyance object of the flight vehicle 100 is either a person or an item. The flight vehicle performance information may include maximum conveyance weight information indicating the maximum weight of the conveyance object which can be conveyed by the flight vehicle 100.

The information acquisition unit 404 may acquire various types of information. For example, the information acquisition unit 404 may acquire various types of information by receiving the various types of information from an external device via the network 20. For example, the information acquisition unit 404 may periodically receive various types of information from an external device. The information acquisition unit 404 may transmit a transmission request for requesting transmission of various types of information to an external device via the network 20. The information acquisition unit 404 may receive the various types of information transmitted by the external device in response to the transmission request. The information acquisition unit 404 may acquire various types of information by receiving an input from the user of the power feed management device 400 using an input device included in the power feed management device 400. The user of the power feed management device 400 may be, for example, an administrator who manages the power feeding device 300. The information acquisition unit 404 may store the acquired information in the information storage unit 402.

For example, the information acquisition unit 404 may receive various types of information from at least one of the flight vehicle 100 or the flight vehicle management device 200 via the network 20. The information acquisition unit 404 may receive various types of information, for example, before the flight vehicle 100 starts flight. The information acquisition unit 404 may receive various types of information, for example, while the flight vehicle 100 is flying.

For example, the information acquisition unit 404 may receive the flight vehicle performance information of the flight vehicle 100 from at least one of the flight vehicle 100 or the flight vehicle management device 200. For example, the information acquisition unit 404 may receive the flight plan information of the flight vehicle 100 from at least one of the flight vehicle 100 or the flight vehicle management device 200. For example, the information acquisition unit 404 may receive the power feed reservation request of the flight vehicle 100 from at least one of the flight vehicle 100 or the flight vehicle management device 200.

For example, the information acquisition unit 404 may receive flight-related information related to the flight of the flight vehicle 100 from at least one of the flight vehicle 100 or the flight vehicle management device 200. The flight-related information may include, for example, the flight position information of the flight vehicle 100. The flight-related information may include, for example, flight altitude information indicating the flight altitude of the flight vehicle 100. The flight-related information may include, for example, flight direction information indicating the flight direction of the flight vehicle 100. The flight-related information may include, for example, flight speed information indicating the flight speed of the flight vehicle 100. The flight-related information may include, for example, flight attitude information indicating the flight attitude of the flight vehicle 100. The flight-related information may include, for example, a battery remaining amount information indicating the battery remaining amount of the battery mounted on the flight vehicle 100. The flight-related information may include battery remaining amount transition prediction information indicating a prediction result obtained by predicting the transition of the battery remaining amount of the battery mounted on the flight vehicle 100. The information acquisition unit 404 may receive conveyance object weight information indicating the total weight of the conveyance object conveyed by the flight vehicle 100 from at least one of the flight vehicle 100 or the flight vehicle management device 200.

The information acquisition unit 404 may acquire the flight-related information of the flight vehicle 100 based on the received various types of information. For example, the information acquisition unit 404 may acquire the flight position information of the flight vehicle 100 based on the captured image and the installation position information. For example, the information acquisition unit 404 may acquire the flight direction information of the flight vehicle 100 based on the captured image and the installation position information. The information acquisition unit 404 may acquire the battery remaining amount transition prediction information of the battery mounted on the flight vehicle 100 based on the battery remaining amount information of the flight vehicle 100.

For example, the information acquisition unit 404 may receive various types of information from the power feeding device 300 via the network 20. For example, the information acquisition unit 404 may receive the captured image obtained by imaging the flight vehicle 100 from the power feeding device 300. The information acquisition unit 404 may receive the captured image via the network 20 from the imaging device installed around the power feeding device 300.

For example, the information acquisition unit 404 may decide at least one of the power feeding device 300 or the imaging device to include the flight vehicle 100 in the imaging area, based on the flight position information of the flight vehicle 100 and the installation position information stored in the information storage unit 402. The information acquisition unit 404 may transmit, via the network 20, an imaging request for requesting imaging of the flight vehicle 100 to the decided at least one of the power feeding device 300 or the imaging device. The information acquisition unit 404 may receive the captured image captured by the at least one of the power feeding device 300 or the imaging device in response to the imaging request.

For example, the information acquisition unit 104 may receive, from the power feeding device 300, power consumption amount information indicating a power consumption amount used by the power feeding device 300 to wirelessly feed power to the flight vehicle 100 in the installation region. For example, the information acquisition unit 104 may acquire the total power consumption amount used by the system 10 in the installation region by summing the power consumption amount indicated by the power consumption amount information received from each of the plurality of power feeding devices 300 installed in the installation region.

For example, the information acquisition unit 104 may receive the weather-related information of the installation region from a weather-related information management device which manages weather-related information related to weather. The weather-related information may include, for example, wind speed information indicating a wind speed. The weather-related information may include, for example, rainfall amount information indicating a rainfall amount. The weather-related information may include snowfall amount information indicating a snowfall amount.

The power feed plan creation unit 406 may create a power feed plan for the flight vehicle 100. The power feed plan creation unit 406 may create the power feed plan for the flight vehicle 100, for example, based on the flight plan information and the usage schedule information stored in the information storage unit 402. The power feed plan creation unit 406 may create the power feed plan for the flight vehicle 100, for example, further based on the power feeding device performance information stored in the information storage unit 402. The power feed plan creation unit 406 may create the power feed plan for the flight vehicle 100, for example, further based on the flight vehicle performance information of the flight vehicle 100 stored in the information storage unit 402. The power feed plan creation unit 406 may create the power feed plan for the flight vehicle 100 further based on the conveyance object weight information of the flight vehicle 100 stored in the information storage unit 402.

The power feed plan may include, for example, the power feeding device 300 which wirelessly feeds power to the flight vehicle 100 while the flight vehicle 100 is flying in accordance with the flight plan. The power feed plan may include, for example, a power feed area which is an area where the power feeding device 300 wirelessly feeds power to the flight vehicle 100. The power feed area may be, for example, an area in the sky corresponding to the vicinity of the installation position of the power feeding device 300. The power feed plan may include, for example, a power feed time zone which is a time zone when the power feeding device 300 wirelessly feeds power to the flight vehicle 100. The power feed plan may include, for example, a power feed amount with which the power feeding device 300 wirelessly feeds power to the flight vehicle 100. The power feed plan may include, for example, a scheduled power consumption amount which is an amount of power scheduled to be used in the installation region for the power feeding device 300 to wirelessly feed power to the flight vehicle 100. The power feed plan may include, for example, a switching position where the power feeding device 300 is switched from one power feeding device 300 to another power feeding device 300. The power feed plan may include a switching moment when the power feeding device 300 is switched from one power feeding device 300 to another power feeding device 300.

For example, the power feed plan creation unit 406 may create the power feed plan for the flight vehicle 100 such that the power feed plan for the flight vehicle 100 satisfies a predetermined power feed condition. The power feed plan creation unit 406 may create the power feed plan for the flight vehicle 100, for example, such that the power feed plan for the flight vehicle 100 flying along the flight path of the flight vehicle 100 included in the flight plan in accordance with the flight plan of the flight vehicle 100 satisfies the power feed condition.

The power feed condition may be, for example, that a flight period during which the flight vehicle 100 flying in accordance with the flight plan flies in the state of not being wirelessly fed with power is shorter than a predetermined flight period threshold. The power feed condition may be, for example, that there is no flight period during which the flight vehicle 100 flying in accordance with the flight plan flies in the state of not being wirelessly fed with power. The power feed condition may be that a flight distance which the flight vehicle 100 flying in accordance with the flight plan flies in the state of not being wirelessly fed with power is shorter than a predetermined flight distance threshold.

For example, when the power feed plan creation unit 406 can create the power feed plan for the flight vehicle 100 satisfying the power feed condition, the power feed plan creation unit 406 may store, as the power feed plan information, the created power feed plan in the information storage unit 402. The power feed plan creation unit 406 may update the usage schedule information stored in the information storage unit 402, based on the created power feed plan.

The power feed plan creation unit 406 may create the power feed plan for the flight vehicle 100, further based on the power feed plan for another flight vehicle 100 and the power amount threshold stored in the information storage unit 402. The power feed plan creation unit 406 may create the power feed plan for the flight vehicle 100, for example, such that the total scheduled power consumption amount scheduled to be used by the system 10 in the installation region is smaller than the power amount threshold.

The information transmission unit 408 may transmit various types of information to an external device via the network 20. For example, the information transmission unit 408 may periodically transmit various types of information to an external device. For example, the information transmission unit 408 may transmit various types of information to an external device once every 10 seconds. The information transmission unit 408 may transmit various types of information to an external device in response to a request from the external device.

For example, the information transmission unit 408 may transmit various types of information to at least one of the flight vehicle 100 or the flight vehicle management device 200 via the network 20. For example, when the power feed plan creation unit 406 can create the power feed plan for the flight vehicle 100 satisfying the power feed condition, the information transmission unit 408 may transmit notification information to at least one of the flight vehicle 100 or the flight vehicle management device 200. In this case, the notification information may notify that the power feed reservation for the flight vehicle 100 has been confirmed, for example. The notification information may notify the power feed plan for the flight vehicle 100 created by the power feed plan creation unit 406.

For example, when the power feed plan creation unit 406 cannot create the power feed plan for the flight vehicle 100 satisfying the power feed condition, the information transmission unit 408 may transmit notification information to at least one of the flight vehicle 100 or the flight vehicle management device 200. In this case, the notification information may notify that the power feed reservation for the flight vehicle 100 cannot be made, for example. The notification information may notify, for example, that the power feed reservation for the flight vehicle 100 is requested to be changed. The notification information may notify, for example, that the flight plan of the flight vehicle 100 is requested to be changed. The notification information may notify the installation position of each of the plurality of power feeding devices 300 indicated by the installation position information stored in the information storage unit 402. The notification information may notify the usage schedule of each of the plurality of power feeding devices 300 indicated by the usage schedule information stored in the information storage unit 402.

For example, the information transmission unit 408 may transmit, to at least one of the flight vehicle 100 or the flight vehicle management device 200, switching information indicating that the power feeding device 300 which wirelessly feeds power to the flight vehicle 100 is switched from one power feeding device 300 to another power feeding device 300. For example, the information transmission unit 408 may transmit the switching information in response to a distance from the flight position of the flight vehicle 100 to the switching position being shorter than a predetermined distance. The information transmission unit 408 may transmit the switching information in response to a period until the switching moment being shorter than a predetermined period.

The switching information may include, for example, the installation position information of one power feeding device 300 and the installation position information of another power feeding device 300. The switching information may include, for example, switching position information indicating the switching position. The switching information may include, for example, switching moment information indicating the switching moment. The switching information may include, for example, the power feed plan information of the flight vehicle 100. The switching information may include the power feeding device performance information of one power feeding device 300 and the power feeding device performance information of another power feeding device 300.

The control unit 410 may control the power feeding device 300. For example, the control unit 410 may control a plurality of power feeding devices 300. For example, the control unit 410 may control a plurality of power feeding devices 300 for each installation region.

For example, the control unit 410 may control the power feeding device 300 by transmitting a power feeding device control signal to the power feeding device 300 via the network 20. The power feeding device control signal may include, for example, a beam direction control signal for controlling the beam direction of the beam radiated by the power feeding device 300. The power feeding device control signal may include, for example, a beam shape control signal for controlling the beam shape of the beam radiated by the power feeding device 300. The power feeding device control signal may include a beam output intensity control signal for controlling the output intensity of the beam radiated by the power feeding device 300.

For example, the control unit 410 may control the power feeding device 300 which wirelessly feeds power to the flight vehicle 100 based on the flight-related information of the flight vehicle 100, the installation position information stored in the information storage unit 402, and the captured image obtained by imaging the flight vehicle 100 and stored in the information storage unit 402. For example, the control unit 410 may decide the power feeding device 300 capable of wirelessly feeding power to the flight vehicle 100 at the flight position of the flight vehicle 100 indicated by the flight position information of the flight vehicle 100, and control the decided power feeding device 300 such that the decided power feeding device 300 wirelessly feeds power to the flight vehicle 100.

For example, the control unit 410 may control the power feeding device 300 which wirelessly feeds power to the flight vehicle 100, further based on the power feed plan information of the flight vehicle 100 stored in the information storage unit 402. The control unit 410 may control the power feeding device 300 which wirelessly feeds power to the flight vehicle 100, for example, so as to wirelessly feed power to the flight vehicle 100 in accordance with the power feed plan for the flight vehicle 100 indicated by the power feed plan information.

For example, the control unit 410 may control at least one power feeding device 300 such that the flight vehicle 100 is wirelessly fed with power from at least one power feeding device 300 among a plurality of power feeding devices 300 while the flight vehicle 100 is flying. The control unit 410 may control the power feeding device 300, for example, such that the power generation panel 150 mounted on the flight vehicle 100 is irradiated with the beam of the power feeding device 300 which wirelessly feeds power to the flight vehicle 100. For example, the control unit 410 may control the beam direction of the beam such that power generation panel 150 is irradiated with the beam.

For example, based on the tracking result, which is obtained by tracking the position of the power generation panel 150 mounted on the flight vehicle 100 by using the flight position of the flight vehicle 100 indicated by the flight position information of the flight vehicle 100 and the captured image obtained by imaging flight vehicle 100, and the installation position of the power feeding device 300, which wirelessly feeds power to the flight vehicle 100, indicated by the installation position information, the control unit 410 may control power feeding device 300 such that the power generation panel 150 is continuously irradiated with the beam of the power feeding device 300. For example, the control unit 410 may control the beam direction of the beam such that the power generation panel 150 is continuously irradiated with the beam.

For example, the control unit 410 may control at least one power feeding device 300 such that the power generation panel 150 mounted on the flight vehicle 100 is simultaneously irradiated with a plurality of beams while the flight vehicle 100 is flying. For example, when the power feeding device 300 which wirelessly feeds power to the flight vehicle 100 includes a plurality of output units, the control unit 410 may control the power feeding device 300 such that the power generation panel 150 is simultaneously irradiated with a plurality of beams of the plurality of output units. The control unit 410 may control a plurality of power feeding devices 300 such that the power generation panel 150 is simultaneously irradiated with a plurality of beams of the plurality of power feeding devices 300.

For example, when the flight vehicle 100 includes a plurality of power generation panels 150, the control unit 410 may control at least one power feeding device 300 such that each of the plurality of power generation panels 150 mounted on the flight vehicle 100 is simultaneously irradiated with a beam. For example, when the power feeding device 300 which wirelessly feeds power to the flight vehicle 100 includes a plurality of output units, the control unit 410 may control the power feeding device 300 such that each of the plurality of power generation panels 150 is simultaneously irradiated with each of a plurality of beams of the plurality of the output units. For example, the control unit 410 may control a plurality of the power feeding devices 300 such that each of the plurality of power generation panels 150 is simultaneously irradiated with each of a plurality of beams of the plurality of power feeding devices 300.

For example, the control unit 410 may control at least one power feeding device 300 such that the flight vehicle 100 is wirelessly fed with a larger power feed amount of power from at least one power feeding device 300 among a plurality of power feeding devices 300 while the flight vehicle 100 is flying. The control unit 410 may control the power feeding device 300, for example, such that the power generation panel 150 mounted on the flight vehicle 100 is irradiated with more beams of the power feeding device 300 which wirelessly feeds power to the flight vehicle 100. For example, the control unit 410 may control the beam shape of the beam so as to match the shape of the power generation panel 150 included in the captured image obtained by imaging the flight vehicle 100.

For example, the control unit 410 may control the power feeding device 300, which wirelessly feeds power to the flight vehicle 100, such that the flight vehicle 100 is continuously wirelessly fed with power from at least one power feeding device 300 among a plurality of power feeding devices 300 while the flight vehicle 100 is flying. For example, the control unit 410 may control one power feeding device 300 and another power feeding device 300 such that the power feeding device 300 which wirelessly feeds power to the flight vehicle 100 is switched from the one power feeding device 300 to the another power feeding device 300.

For example, based on the flight position information of the flight vehicle 100, the installation position information, and the usage schedule information, the control unit 410 may decide a switching position at which the power feeding device 300 which wirelessly feeds power to the flight vehicle 100 is switched from one power feeding device 300 to another power feeding device 300. The control unit 410 may control the one power feeding device 300 and the another power feeding device 300 such that the power feeding device 300 which wirelessly feeds power to the flight vehicle 100 is switched at the decided switching position from the one power feeding device 300 to the another power feeding device 300. The control unit 410 may control the one power feeding device 300 and the another power feeding device 300 such that the power feeding device 300 which wirelessly feeds power to the flight vehicle 100 is switched from the one power feeding device 300 to the another power feeding device 300 at the switching position included in the power feed plan for the flight vehicle 100.

For example, based on the flight position information of the flight vehicle 100 the installation position information, and the usage schedule information, the control unit 410 may decide a switching moment when the power feeding device 300 which wirelessly feeds power to the flight vehicle 100 is switched from one power feeding device 300 to another power feeding device 300. The control unit 410 may control the one power feeding device 300 and the another power feeding device 300 such that the power feeding device 300 which wirelessly feeds power to the flight vehicle 100 is switched at the decided switching moment from one power feeding device 300 to the another power feeding device 300. The control unit 410 may control the one power feeding device 300 and the another power feeding device 300 such that the power feeding device 300 which wirelessly feeds power to the flight vehicle 100 is switched from the one power feeding device 300 to the another power feeding device 300 at the switching moment included in the power feed plan for the flight vehicle 100.

For example, when the power feeding device 300 which wirelessly feeds power to the flight vehicle 100 is switched from one power feeding device 300 to another power feeding device 300, the control unit 410 may control the one power feeding device 300 and the another power feeding device 300 such that both the one power feeding device 300 and the another power feeding device 300 wirelessly feed power to the flight vehicle 100 during a predetermined period after the another power feeding device 300 starts wireless power feed to the flight vehicle 100. For example, the control unit 410 may control the another power feeding device 300 such that the power feed amount of power wirelessly fed by the another power feeding device 300 to the flight vehicle 100 increases, in response to a decrease in the power feed amount of power wirelessly fed by the one power feeding device 300 to the flight vehicle 100. For example, the control unit 410 may control the another power feeding device 300 such that the total power feed amount of the power feed amount of power wirelessly fed by the one power feeding device 300 to the flight vehicle 100 and the power feed amount of power wirelessly fed by the another power feeding device 300 to the flight vehicle 100 is the power feed amount included in the power feed plan for the flight vehicle 100 indicated by the power feed plan information of the flight vehicle 100 stored in the information storage unit 402. The control unit 410 may control the one power feeding device 300 and the another power feeding device 300 such that each of the one power feeding device 300 and the another power feeding device 300 wirelessly feeds the power feed amount of power to the flight vehicle 100.

For example, when the power feeding device 300 which wirelessly feeds power to the flight vehicle 100 having a plurality of power generation panels 150 mounted thereon is switched from one power feeding device 300 to another power feeding device 300, the control unit 410 may control the another power feeding device 300 such that the another power feeding device 300 irradiates, with a beam, the power generation panel 150 different from the power generation panel 150 irradiated with a beam by the one power feeding device 300. The control unit 410 may control the another power feeding device 300 such that the another power feeding device 300 irradiates, with a beam, the same power generation panel 150 as the power generation panel 150 irradiated with a beam by the one power feeding device 300.

The control unit 410 may control the flight vehicle 100. For example, the control unit 410 may control the flight vehicle 100 by transmitting a flight vehicle control signal to the flight vehicle 100 via the network 20.

The flight vehicle control signal may control, for example, the take-off of the flight vehicle 100. The flight vehicle control signal may control, for example, the flight of the flight vehicle 100. The flight vehicle control signal may control, for example, the landing of the flight vehicle 100. The flight vehicle control signal may control the orientation of the power generation panel 150 mounted on the flight vehicle 100.

The flight vehicle control signal may include, for example, a flight position control signal for controlling the flight position of the flight vehicle 100. The flight vehicle control signal may include, for example, a flight altitude control signal for controlling the flight altitude of the flight vehicle 100. The flight vehicle control signal may include, for example, a flight direction control signal for controlling the flight direction of the flight vehicle 100. The flight vehicle control signal may include, for example, a flight speed control signal for controlling the flight speed of the flight vehicle 100. The flight vehicle control signal may include, for example, a flight attitude control signal for controlling the flight attitude of the flight vehicle 100. The flight vehicle control signal may include an angle control signal for controlling the angle of the mounting portion 120 included in the flight vehicle 100.

The control unit 410 may control the flight vehicle 100, for example, based on the flight-related information of the flight vehicle 100 and the installation position information stored in the information storage unit 402. The control unit 410 may control the flight vehicle 100, for example, further based on the flight vehicle performance information stored in the information storage unit 402. The control unit 410 may control the flight vehicle 100, for example, further based on the power feed plan information of the flight vehicle 100 stored in the information storage unit 402.

The control unit 410 may control the flight vehicle 100, for example, such that the power generation panel 150 mounted on the flight vehicle 100 has an orientation that allows a larger power feed amount of power to be wirelessly fed from the power feeding device 300 wirelessly feeding power to the flight vehicle 100 while the flight vehicle 100 is flying. For example, the control unit 410 may control the orientation of the power generation panel 150 such that an angle formed by the orientation of the power generation panel 150 and the beam direction of the beam radiated by the power feeding device 300 is a smaller acute angle.

The control unit 410 may control the orientation of the power generation panel 150, for example, by controlling the angle of the mounting portion 120 on which the power generation panel 150 is mounted. The control unit 410 may control the orientation of the power generation panel 150, for example, by controlling the flight position of the flight vehicle 100. The control unit 410 may control the orientation of the power generation panel 150, for example, by controlling the flight direction of the flight vehicle 100. The control unit 410 may control the orientation of the power generation panel 150 by controlling the flight attitude of the flight vehicle 100.

For example, when the power feeding device 300 which wirelessly feeds power to the flight vehicle 100 is switched from one power feeding device 300 to another power feeding device 300, the control unit 410 may control the flight vehicle 100 such that the power generation panel 150 mounted on the flight vehicle 100 has an orientation that allows a larger power feed amount of power to be wirelessly fed from the another power feeding device 300. For example, the control unit 410 may control the orientation of the power generation panel 150 such that an angle formed by the orientation of the power generation panel 150 and the beam direction of the beam radiated by the another power feeding device 300 is a smaller acute angle.

For example, based on the flight direction information of the flight vehicle 100 stored in the information storage unit 402, the control unit 410 may control the flight vehicle 100 such that the power generation panel 150 mounted on the flight vehicle 100 has an orientation that allows the air resistance received by the power generation panel 150 to be smaller. For example, the control unit 410 may control the orientation of the power generation panel 150 such that an angle formed by the orientation of the power generation panel 150 and the flight direction of the flight vehicle 100 is a larger acute angle. The control unit 410 may control the orientation of the power generation panel 150, for example, such that an angle formed by the orientation of the power generation panel 150 and the flight direction of the flight vehicle 100 is a right angle. In this case, the control unit 410 may control the power feeding device 300 such that the beam of the power feeding device 300 which wirelessly feeds power to the flight vehicle 100 has a shape that allows the flight vehicle 100 to be wirelessly fed with a larger power feed amount of power.

The power feed plan creation unit 406 may decide a flight path along which the flight vehicle 100 flies from the departure point to the destination point. In this case, the flight plan of the flight vehicle 100 indicated by the flight plan information of the flight vehicle 100 acquired by the information acquisition unit 404 may not include the flight path.

For example, the power feed plan creation unit 406 may decide the flight path of the flight vehicle 100 based on the flight plan information. The power feed plan creation unit 406 may decide the flight path of the flight vehicle 100, for example, based on the departure point of the flight vehicle 100 and the destination point of the flight vehicle 100 included in the flight plan of the flight vehicle 100 indicated by the flight plan information. The power feed plan creation unit 406 may decide the flight path of the flight vehicle 100, for example, such that a flight distance which the flight vehicle 100 flies from the departure point to the destination point is the shortest. The power feed plan creation unit 406 may decide the flight path of the flight vehicle 100, for example, such that a flight time during which the flight vehicle 100 flies from the departure point to the destination point is the shortest. The power feed plan creation unit 406 may decide the flight path of the flight vehicle 100 such that the electric power required for the flight vehicle 100 to fly from the departure point to the destination point is the smallest.

The power feed plan creation unit 406 may decide the flight path of the flight vehicle 100, for example, further based on the flight speed of the flight vehicle 100 included in the flight plan of the flight vehicle 100 indicated by the flight plan information. For example, when the flight speed of the flight vehicle 100 is larger than a predetermined flight speed threshold, the power feed plan creation unit 406 may decide the flight path of the flight vehicle 100 so as to prioritize flying along a flight path for flight vehicles which fly at a high speed.

The power feed plan creation unit 406 may decide the flight path of the flight vehicle 100, for example, further based on the flight vehicle performance information stored in the information storage unit 402. For example, when the weight of the flight vehicle 100 indicated by the flight vehicle weight information is larger than a predetermined flight vehicle weight threshold, the power feed plan creation unit 406 may decide the flight path of the flight vehicle 100 so as to prioritize flying along a flight path for large flight vehicles. For example, when the conveyance object of the flight vehicle 100 indicated by the conveyance object type information is an item, the power feed plan creation unit 406 may decide the flight path of the flight vehicle 100 so as to prioritize flying along a flight path for flight vehicles which convey items. For example, when the conveyance object of the flight vehicle 100 indicated by the conveyance object type information is a person, the power feed plan creation unit 406 may decide the flight path of the flight vehicle 100 so as to prioritize flying along a flight path for flight vehicles which convey persons.

For example, based on the decided flight path of the flight vehicle 100, and the flight plan information and the usage schedule information stored in the information storage unit 402, the power feed plan creation unit 406 may create the power feed plan for the flight vehicle 100 so as to satisfy the power feed condition. The power feed plan creation unit 406 may create the power feed plan for the flight vehicle 100, for example, such that the flight vehicle 100 flying along the flight path of the flight vehicle 100 decided by the power feed plan creation unit 406 in accordance with the flight plan of the flight vehicle 100 indicated by the flight plan information satisfies the power feed condition.

In a case where the power feed plan creation unit 406 cannot create the power feed plan for the flight vehicle 100 which satisfies the power feed condition, when the flight path of the flight vehicle 100 can be changed within the allowable delay time of the flight vehicle 100 included in the flight plan of the flight vehicle 100 indicated by the flight plan information, the power feed plan creation unit 406 may change the decided flight path of the flight vehicle 100. The power feed plan creation unit 406 may create the power feed plan for the flight vehicle 100 so as to satisfy the power feed condition, based on the changed flight path of the flight vehicle 100. When the power feed plan creation unit 406 cannot change the flight path of the flight vehicle 100 within the allowable delay time, the information transmission unit 408 may transmit notification information to at least one of the flight vehicle 100 or the flight vehicle management device 200.

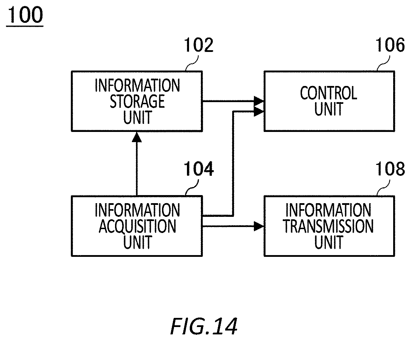

Fig. 14 schematically shows an example of a functional configuration of the flight vehicle 100. The flight vehicle 100 may include an information storage unit 102, an information acquisition unit 104, a control unit 106, and an information transmission unit 108. Note that the flight vehicle 100 is not necessarily required to have all these configurations.

The information storage unit 102 may store various types of information. The information storage unit 102 may store, for example, the flight vehicle performance information of the flight vehicle 100. The information storage unit 102 may store the installation position information.

The information acquisition unit 104 may acquire various types of information. For example, the information acquisition unit 104 may acquire the flight-related information of the flight vehicle 100 by using various sensors included in the flight vehicle 100. For example, the information acquisition unit 104 may receive various types of information by receiving various types of information from an external device via the network 20. For example, the information acquisition unit 104 may receive the flight plan information of the flight vehicle 100 from the flight vehicle management device 200. For example, the information acquisition unit 104 may receive the power feed plan information of the flight vehicle 100 from the power feed management device 400. For example, the information acquisition unit 104 may receive the installation position information from the power feed management device 400. For example, the information acquisition unit 104 may receive the power feeding device performance information from the power feed management device 400. For example, the information acquisition unit 104 may receive the usage schedule information from the power feed management device 400. For example, the information acquisition unit 104 may receive the notification information from the power feed management device 400. The information acquisition unit 104 may receive the switching information of the flight vehicle 100 from the power feed management device 400. The information acquisition unit 104 may be an example of the switching information reception unit. The information acquisition unit 104 may store the acquired various types of information in the information storage unit 102.

The control unit 106 may control the flight vehicle 100. The control unit 106 may control, for example, the take-off of the flight vehicle 100. The control unit 106 may control, for example, the flight of the flight vehicle 100. The control unit 106 may control, for example, the landing of the flight vehicle 100. The control unit 106 may control the orientation of the power generation panel 150 mounted on the flight vehicle 100.

The control unit 106 may control, for example, the flight position of the flight vehicle 100. The control unit 106 may control, for example, the flight altitude of the flight vehicle 100. The control unit 106 may control, for example, the flight direction of the flight vehicle 100. The control unit 106 may control, for example, the flight speed of the flight vehicle 100. The control unit 106 may control, for example, the flight attitude of the flight vehicle 100. The control unit 106 may control the angle of the mounting portion 120 included in the flight vehicle 100.

For example, the control unit 106 may generate the flight vehicle control signal of the flight vehicle 100 and control the flight vehicle 100 in accordance with the generated flight vehicle control signal. The control unit 106 may control the flight vehicle 100, for example, in accordance with the flight vehicle control signal of the flight vehicle 100 received by the information acquisition unit 104 from the flight vehicle management device 200. The control unit 106 may control the flight vehicle 100, for example, in accordance with the flight vehicle control signal of the flight vehicle 100 received by the information acquisition unit 104 from the power feed management device 400.

For example, when the flight vehicle 100 is a flight vehicle which autonomously flies, the control unit 106 may control the flight vehicle 100 such that the flight vehicle 100 autonomously flies, based on the flight plan information of the flight vehicle 100 received by the information acquisition unit 104 from the flight vehicle management device 200. The control unit 106 may control the flight vehicle 100 such that the flight vehicle 100 autonomously flies, further based on the power feed plan information of the flight vehicle 100 received by the information acquisition unit 104 from the power feed management device 400.

The control unit 106 may control the flight vehicle 100, for example, based on the flight-related information of the flight vehicle 100 acquired by the information acquisition unit 104 and the installation position information stored in the information storage unit 102. The control unit 106 may control the flight vehicle 100, for example, further based on the flight vehicle performance information stored in the information storage unit 102. The control unit 106 may control the flight vehicle 100, for example, further based on the power feed plan information of the flight vehicle 100 stored in the information storage unit 102.

The control unit 106 may control the flight vehicle 100, for example, such that the power generation panel 150 mounted on the flight vehicle 100 has an orientation that allows a larger power feed amount of power to be wirelessly fed from the power feeding device 300 wirelessly feeding power to the flight vehicle 100 while the flight vehicle 100 is flying. For example, the control unit 106 may control the orientation of the power generation panel 150 such that an angle formed by the orientation of the power generation panel 150 and the beam direction of the beam radiated by the power feeding device 300 is a smaller acute angle.

The control unit 106 may control the orientation of the power generation panel 150, for example, by controlling the angle of the mounting portion 120 on which the power generation panel 150 is mounted. The control unit 106 may control the orientation of the power generation panel 150, for example, by controlling the flight position of the flight vehicle 100. The control unit 106 may control the orientation of the power generation panel 150, for example, by controlling the flight direction of the flight vehicle 100. The control unit 106 may control the orientation of the power generation panel 150 by controlling the flight attitude of the flight vehicle 100.

For example, the control unit 106 may control the flight vehicle 100 such that the power generation panel 150 mounted on the flight vehicle 100 has an orientation that allows a larger power feed amount of power to be wirelessly fed from another power feeding device 300, in response to the reception of the switching information by the information acquisition unit 104. For example, the control unit 106 may control the orientation of the power generation panel 150 such that an angle formed by the orientation of the power generation panel 150 and the beam direction of the beam radiated by the another power feeding device 300 is a smaller acute angle.

For example, based on the flight direction information of the flight vehicle 100 acquired by information acquisition unit 104, the control unit 106 may control the flight vehicle 100 such that the power generation panel 150 mounted on the flight vehicle 100 has an orientation that allows the air resistance received by the power generation panel 150 to be smaller. For example, the control unit 106 may control the orientation of the power generation panel 150 such that an angle formed by the orientation of the power generation panel 150 and the flight direction of the flight vehicle 100 is a larger acute angle. The control unit 106 may control the orientation of the power generation panel 150, for example, such that an angle formed by the orientation of the power generation panel 150 and the flight direction of the flight vehicle 100 is a right angle.

The information transmission unit 108 may transmit various types of information to an external device. For example, the information transmission unit 108 may periodically transmit various types of information to an external device. The information transmission unit 108 may transmit various types of information to an external device in response to the transmission request received by the information acquisition unit 104 from the external device.

The information transmission unit 108 may transmit various types of information to an external device, for example, before the flight vehicle 100 starts flight. The information transmission unit 108 may transmit various types of information to an external device, for example, while the flight vehicle 100 is flying.

For example, the information transmission unit 108 may transmit various types of information to at least one of the flight vehicle management device 200 or the power feed management device 400 via the network 20. For example, the information transmission unit 108 may transmit the flight vehicle performance information to at least one of the flight vehicle management device 200 or the power feed management device 400. For example, the information transmission unit 108 may transmit the flight-related information to at least one of the flight vehicle management device 200 or the power feed management device 400. The information transmission unit 108 may transmit the conveyance object weight information to at least one of the flight vehicle management device 200 or the power feed management device 400.

For example, the information transmission unit 108 may transmit a power feed-related request, which indicates a request related to the wireless power feed to the flight vehicle 100, to at least one of the flight vehicle management device 200 or the power feed management device 400 while the flight vehicle 100 is flying. The information transmission unit 108 may transmit the power feed-related request, for example, when the battery remaining amount of the battery mounted on the flight vehicle 100 is lower than a predetermined battery remaining amount threshold. In this case, the power feed-related request may be a power feed amount increase request for increasing the power feed amount of power fed by the power feeding device 300 which wirelessly feeds power to the flight vehicle 100. The power feed-related request may be an additional power feed request for adding wireless power feed to be performed by the power feeding device 300 which is not wirelessly feeding power to the flight vehicle 100. When the power feeding device 300 includes an output unit, the additional power feed request may request to add wireless power feed to be performed by the output unit of the power feeding device 300 which is not wirelessly feeding power to the flight vehicle 100. The information transmission unit 108 may transmit the power feed-related request when the battery remaining amount is larger than a predetermined battery remaining amount threshold. In this case, the power feed-related request may be a power feed amount decrease request for decreasing the power feed amount of power fed by the power feeding device 300 which wirelessly feeds power to the flight vehicle 100.

For example, the information transmission unit 108 may transmit various types of information to the power feeding device 300. The information transmission unit 108 may transmit various types of information to the power feeding device 300, for example, via a wireless communication connection between the flight vehicle 100 and the power feeding device 300. The information transmission unit 108 may transmit various types of information to the power feeding device 300 via the network 20.

For example, the information transmission unit 108 may transmit the power feed-related request to the power feeding device 300 while the flight vehicle 100 is flying. The power feeding device 300 may transmit the power feed-related request received from the flight vehicle 100 to the power feed management device 400 via the network 20.

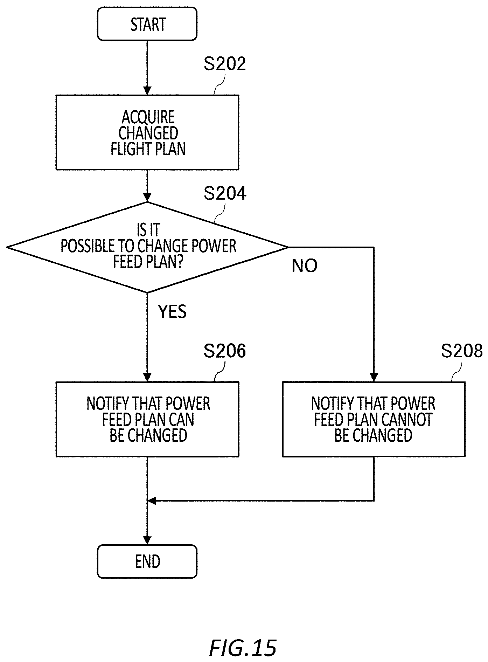

Fig. 15 is an explanatory diagram for explaining an example of a processing flow of the power feed management device 400. In Fig. 15, a state where the flight vehicle 100 is flying in accordance with the flight plan will be described as a start state.

In S202, when the flight plan of the flight vehicle 100 is changed while the flight vehicle 100 is flying in accordance with the flight plan, the information acquisition unit 404 may acquire flight plan information indicating the changed flight plan of the flight vehicle 100, from at least one of the flight vehicle 100 or the flight vehicle management device 200. For example, the flight vehicle management device 200 may change the flight plan of the flight vehicle 100 when the flight vehicle 100 needs to yield the flight path to another flight vehicle having a higher priority than the flight vehicle 100. The another flight vehicle having a higher priority than the flight vehicle 100 may be, for example, a flight vehicle used for emergency services such as a firefighting service, an emergency service, a disaster relief service, and a police service. The another flight vehicle having a higher priority than the flight vehicle 100 may be, for example, a flight vehicle used for monitoring work or news reporting work. For example, when a traffic jam occurs in the flight path of the flight vehicle 100, the flight vehicle management device 200 may change the flight plan of the flight vehicle 100. For example, when the weather on the flight path of the flight vehicle 100 is bad weather such as strong wind, the flight vehicle management device 200 may change the flight plan of the flight vehicle 100. When the battery remaining amount of the battery mounted on the flight vehicle 100 becomes less than a predetermined battery remaining amount threshold, the flight vehicle management device 200 may change the flight plan of the flight vehicle 100.

In S204, the power feed plan creation unit 406 may change the power feed plan for the flight vehicle 100 so as to satisfy the power feed condition, based on the flight plan information, which indicates the changed flight plan of the flight vehicle 100, acquired by the information acquisition unit 404 in S202 and the usage schedule information stored in the information storage unit 402. For example, the power feed plan creation unit 406 may change the power feeding device 300 wirelessly feeding power to the flight vehicle 100 while the flight vehicle 100 is flying in accordance with the flight plan. For example, the power feed plan creation unit 406 may change the power feed area of the power feeding device 300. The power feed plan creation unit 406 may change the power feed time zone of the power feeding device 300. For example, the power feed plan creation unit 406 may change the power feed amount of power wirelessly fed to the flight vehicle 100. The power feed plan creation unit 406 may change the switching position. The power feed plan creation unit 406 may change the switching moment.

When the power feed plan creation unit 406 can change the power feed plan for the flight vehicle 100 so as to satisfy the power feed condition, the process may proceed to S206. When the power feed plan creation unit 406 cannot change the power feed plan for the flight vehicle 100 so as to satisfy the power feed condition, the process may proceed to S208.

When the power feed plan creation unit 406 decides that the power feed plan for the flight vehicle 100 can be changed so as to satisfy the power feed condition, the power feed plan creation unit 406 may update the usage schedule information stored in the information storage unit 402, based on the changed power feed plan for the flight vehicle 100. In S206, the information transmission unit 408 may transmit notification information to at least one of the flight vehicle 100 or the flight vehicle management device 200 via the network 20. In this case, the notification information may notify that the power feed plan for the flight vehicle 100 can be changed. Thereafter, the control unit 410 may control the power feeding device 300 which wirelessly feeds power to the flight vehicle 100, so as to wirelessly feed power to the flight vehicle 100 in accordance with the changed power feed plan for the flight vehicle 100. Thereafter, the processing in a case where the power feed plan for the flight vehicle 100 can be changed may end.

In S208, the information transmission unit 408 may transmit notification information to at least one of the flight vehicle 100 or the flight vehicle management device 200. In this case, the notification information may notify, for example, that the power feed plan for the flight vehicle 100 cannot be changed. The notification information may notify, for example, the cancellation of the flight according to the flight plan of the flight vehicle 100. The notification information may notify, for example, the installation position of each of the plurality of power feeding devices 300 indicated by the installation position information stored in the information storage unit 402. The notification information may notify the usage schedule of each of the plurality of power feeding devices 300 indicated by the usage schedule information stored in the information storage unit 402.

The flight vehicle management device 200 may control the flight vehicle 100 in response to the reception of the notification information. The flight vehicle management device 200 may control the flight vehicle 100, for example, such that the flight speed of the flight vehicle 100 is reduced. The flight vehicle management device 200 may control the flight vehicle 100, for example, such that the flight vehicle 100 temporarily hovers. The flight vehicle management device 200 may control the flight vehicle 100 such that the flight position of the flight vehicle 100 is included in a range where a beam can be radiated by the power feeding device 300 capable of wirelessly feeding power to the flight vehicle 100, based on the installation position and the usage schedule of each of the plurality of power feeding devices 300 included in the notification information. The flight vehicle management device 200 may control the flight vehicle 100, for example, such that the flight vehicle 100 returns to the departure point included in the flight plan of the flight vehicle 100. The flight vehicle management device 200 may control the flight vehicle 100 such that the flight vehicle 100 lands in a safe place. The control unit 106 may control the flight vehicle 100 in a manner similar to that of the flight vehicle management device 200. Thereafter, the processing in a case where the power feed plan for the flight vehicle 100 cannot be changed may end.

In the example of the processing flow of the power feed management device 400 shown in Fig. 15, S202 may be replaced with processing in which the information acquisition unit 404 receives the power feed-related request transmitted by the flight vehicle 100. In this case, in S204, the power feed plan creation unit 406 may change the power feed plan for the flight vehicle 100 so as to satisfy the power feed condition and the power feed-related request, based on the flight plan of the flight vehicle 100, the power feed plan for the flight vehicle 100, and the usage schedule information stored in the information storage unit 402.

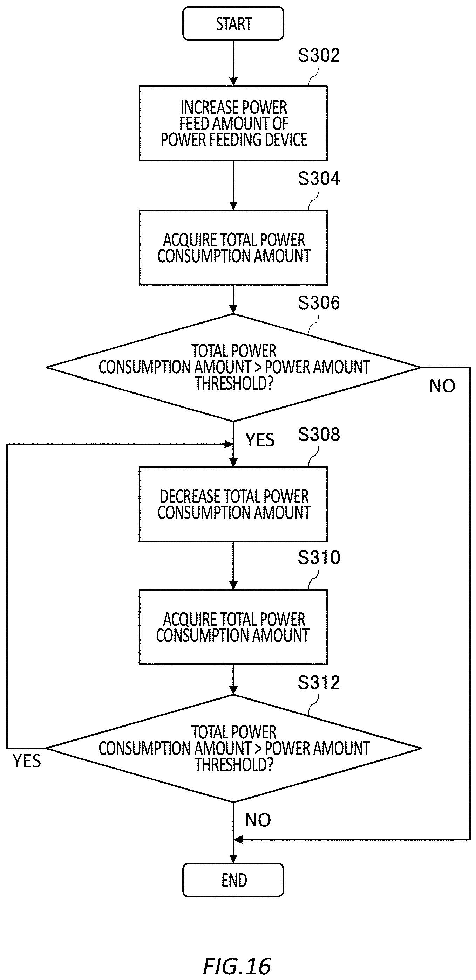

Fig. 16 is an explanatory diagram for explaining an example of a processing flow of the power feed management device 400. In Fig. 16, a state where the total power consumption amount used by the system 10 in the installation region is smaller than the power amount threshold will be described as a start state.

In S302, the control unit 410 may increase the power feed amount of the power feeding device 300 installed in the installation region. The control unit 410 may increase the power feed amount of the plurality of power feeding devices 300 installed in the installation region.

For example, when the information acquisition unit 104 receives the power feed amount increase request transmitted by the flight vehicle 100 flying in the installation region, the control unit 410 may increase the power feed amount of the power feeding device 300 installed in the installation region. For example, when the information acquisition unit 104 receives the additional power feed request transmitted by the flight vehicle 100 flying in the installation region, the control unit 410 may increase the power feed amount of the power feeding device 300 installed in the installation region. For example, when the information acquisition unit 104 receives, from the flight vehicle management device 200, the notification information for notifying that the flight vehicle used for emergency services flies in the installation region, the control unit 410 may increase the power feed amount of the power feeding device 300 installed in the installation region. For example, when the wind speed of the installation region indicated by the wind speed information of the installation region received by the information acquisition unit 104 is higher than a predetermined wind speed threshold stored in the information storage unit 402, the control unit 410 may increase the power feed amount of the power feeding device 300 installed in the installation region. For example, when the rainfall amount of the installation region indicated by the rainfall amount information of the installation region received by the information acquisition unit 104 is larger than a predetermined rainfall amount threshold stored in the information storage unit 402, the control unit 410 may increase the power feed amount of the power feeding device 300 installed in the installation region. When the snowfall amount of the installation region indicated by the snowfall amount information of the installation region received by the information acquisition unit 104 is larger than a predetermined snowfall amount threshold stored in the information storage unit 402, the control unit 410 may increase the power feed amount of the power feeding device 300 installed in the installation region.

In S304, the information acquisition unit 104 may acquire the total power consumption amount used by the system 10 in the installation region. The control unit 410 may monitor the amount of power used by the system 10 in the installation region, based on the total power consumption amount acquired by the information acquisition unit 104.

In S306, the control unit 410 may determine whether the total power consumption amount acquired by the information acquisition unit 104 in S304 is larger than the power amount threshold stored in the information storage unit 402. When the total power consumption amount is larger than the power amount threshold, the control unit 410 may determine that the amount of power used by the system 10 in the installation region is insufficient. In this case, the process proceeds to S308. When the total power consumption amount is smaller than the power amount threshold, the control unit 410 may determine that the amount of power used by the system 10 in the installation region is not insufficient. In this case, the processing may end.

In S308, the control unit 410 may decrease the total power consumption amount such that the total power consumption amount is smaller than the power amount threshold. The control unit 410 may decrease the total power consumption amount, for example, by controlling the flight vehicle 100 flying in the installation region and the power feeding device 300 installed in the installation region.

For example, the control unit 410 may control the flight vehicle 100 such that the flight speed of the flight vehicle 100 decreases, and control the power feeding device 300 such that the power feed amount of the power feeding device 300 wirelessly feeding power to the flight vehicle 100 decreases. For example, the control unit 410 may control the flight vehicle 100 such that the flight vehicle 100 temporarily hovers, and control the power feeding device 300 such that the power feed amount of the power feeding device 300 wirelessly feeding power to the flight vehicle 100 decreases. For example, the control unit 410 may control the flight vehicle 100 such that the flight vehicle 100 lands in a safe place, and control the power feeding device 300 such that the wireless power feed of the power feeding device 300 wirelessly feeding power to the flight vehicle 100 is interrupted, in response to the flight vehicle 100 landing in the safe place. The control unit 410 may control the flight vehicle 100 such that the flight vehicle 100 returns to the departure point included in the flight plan of the flight vehicle 100, and control the power feeding device 300 such that the wireless power feed of the power feeding device 300 wirelessly feeding power to the flight vehicle 100 is interrupted, in response to the flight vehicle 100 returning to the departure point.

In S310, the information acquisition unit 104 may acquire the total power consumption amount used by the system 10 in the installation region. In S312, the control unit 410 may determine whether the total power consumption amount acquired by the information acquisition unit 104 in S310 is larger than the power amount threshold. When the total power consumption amount is larger than the power amount threshold, the control unit 410 may determine that the amount of power used by the system 10 in the installation region is insufficient. In this case, the process returns to S308. When the total power consumption amount is smaller than the power amount threshold, the control unit 410 may determine that the amount of power used by the system 10 in the installation region is not insufficient. In this case, the processing may end.

In response to the control unit 410 determining in S312 that the total power consumption amount is smaller than the power amount threshold, the information transmission unit 408 may transmit, to the flight vehicle management device 200, the notification information for notifying that the flight plan of the flight vehicle 100 flying in the installation region is requested to be changed. The notification information may notify, for example, the installation position of each of the plurality of power feeding devices 300 installed in the installation region, the installation position being indicated by the installation position information stored in the information storage unit 402. The notification information may notify, for example, the usage schedule of each of the plurality of power feeding devices 300 installed in the installation region, the usage schedule being indicated by the usage schedule information stored in the information storage unit 402. The notification information may notify the total power consumption amount, which is used by the system 10 in the installation region, acquired by the information acquisition unit 104.

The flight vehicle management device 200 may change the flight plan of the flight vehicle 100 flying in the installation region and transmit the changed flight plan of the flight vehicle 100 to the power feed management device 400, in response to the reception of the notification information from the power feed management device 400. The power feed plan creation unit 406 may change the power feed plan for the flight vehicle 100 flying in the installation region, in response to the information acquisition unit 104 acquiring the flight plan information indicating the changed flight plan of the flight vehicle 100.

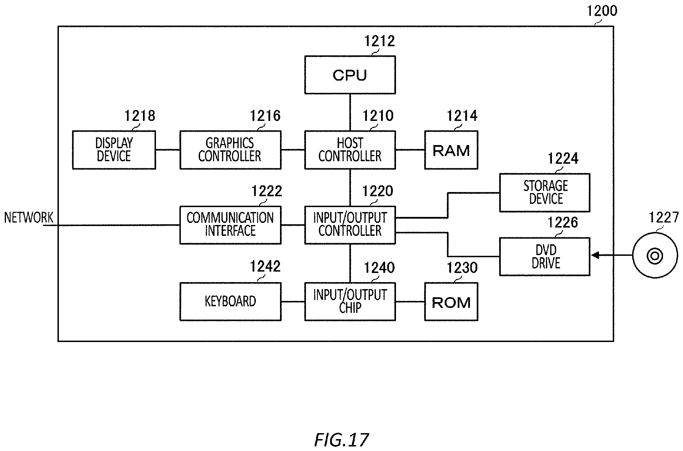

Fig. 17 schematically shows an example of a hardware configuration of a computer 1200 that functions as the flight vehicle 100 and the power feed management device 400. Programs installed in the computer 1200 can cause the computer 1200 to function as one or more "units" of the device according to the above described embodiment or can cause the computer 1200 to execute operations associated with the devices according to the above described embodiment or the one or more "units", and/or can cause the computer 1200 to execute a process according to the above described embodiment or steps of the process. Such a program may be executed by a CPU 1212 to cause the computer 1200 to perform specific operations associated with some or all of the blocks in the flowcharts and block diagrams described in the specification.

The computer 1200 according to an embodiment may include a CPU 1212, a RAM 1214, and a graphics controller 1216, which are connected to each other via a host controller 1210. The computer 1200 may also include input/output units such as a communication interface 1222, a storage device 1224, a DVD drive 1226 and an IC card drive, which are connected to the host controller 1210 via an input/output controller 1220. The DVD drive 1226 may be a DVD-ROM drive, a DVD-RAM drive, and the like. The storage device 1224 may be a hard disk drive, a solid-state drive, and the like. The computer 1200 may also include legacy input/output units such as a ROM 1230 and a keyboard 1242, which are connected to the input/output controller 1220 through an input/output chip 1240.

The CPU 1212 may operate according to the programs stored in the ROM 1230 and the RAM 1214, thereby controlling each unit. The graphics controller 1216 may obtain image data which is generated, by the CPU 1212, in a frame buffer or the like provided in the RAM 1214 or in itself so as to cause the image data to be displayed on a display device 1218.

The communication interface 1222 may communicate with other electronic devices via a network. The storage device 1224 may store a program and data used by the CPU 1212 in the computer 1200. The DVD drive 1226 may read the programs or the data from the DVD-ROM 1227 or the like, and provide the storage device 1224 with the programs or the data. The IC card drive may read the program and data from an IC card, and/or write the program and data to the IC card.

The ROM 1230 may store therein a boot program or the like executed by the computer 1200 at the time of activation, and/or a program depending on the hardware of the computer 1200. The input/output chip 1240 may also connect various input/output units via a USB port, a parallel port, a serial port, a keyboard port, a mouse port, or the like to the input/output controller 1220.

A program may be provided by a computer readable storage medium such as a DVD-ROM 1227 or an IC card. The program may be read from the computer readable storage medium, installed into the storage device 1224, RAM 1214, or ROM 1230, which are also examples of a computer readable storage medium, and executed by the CPU 1212. Information processing written in these programs may be read by the computer 1200, and provide cooperation between the programs and the various types of hardware resources described above. A device or method may be constituted by realizing the operation or processing of information in accordance with the use of the computer 1200.

For example, in a case where a communication is performed between the computer 1200 and an external device, the CPU 1212 may execute a communication program loaded in the RAM 1214 and instruct the communication interface 1222 to perform communication processing based on a process written in the communication program. The communication interface 1222, under control of the CPU 1212, may read transmission data stored on a transmission buffer region provided in a recording medium such as the RAM 1214, the storage device 1224, the DVD-ROM 1227, or the IC card, and transmit the read transmission data to a network or write reception data received from a network to a reception buffer region or the like provided on the recording medium.

In addition, the CPU 1212 may be configured to cause all or a necessary portion of a file or a database, which has been stored in an external recording medium such as the storage device 1224, the DVD drive 1226 (DVD-ROM 1227), the IC card and the like, to be read into the RAM 1214, thereby executing various types of processing on the data on the RAM 1214. Then, the CPU 1212 may write the processed data back in the external recording medium.

Various types of information, such as various types of programs, data, tables, and databases, may be stored in the recording medium to undergo information processing. The CPU 1212 may execute, on the data read from the RAM 1214, various types of processing including various types of operations, information processing, conditional judgment, conditional branching, unconditional branching, information retrieval/replacement, or the like described throughout the present disclosure and specified by instruction sequences of the programs, to write the results back to the RAM 1214. In addition, the CPU 1212 may retrieve information in a file, a database, or the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the plurality of entries, and read the attribute value of the second attribute stored in the entry, thereby obtaining the attribute value of the second attribute associated with the first attribute satisfying a predetermined condition.

The programs or software module described above may be stored on the computer 1200 or in a computer readable storage medium near the computer 1200. In addition, a recording medium such as a hard disk or a RAM provided in a server system connected to a dedicated communication network or the Internet may be able to be used as the computer readable storage medium, thereby providing the program to the computer 1200 via the network.

Blocks in flowcharts and block diagrams in an embodiment may represent steps of processes in which operations are performed or "units" of devices responsible for performing operations. A specific step and "unit" may be implemented by dedicated circuitry, programmable circuitry supplied along with a computer readable instruction stored on a computer readable storage medium, and/or a processor supplied along with the computer readable instruction stored on the computer readable storage medium. The dedicated circuitry may include a digital and/or analog hardware circuit, or may include an integrated circuit (IC) and/or a discrete circuit. The programmable circuitry may include, for example, a reconfigurable hardware circuit including logical AND, logical OR, logical XOR, logical NAND, logical NOR, and other logical operations, and a flip-flop, a register, and a memory element, such as a field-programmable gate array (FPGA) and a programmable logic array (PLA).

The computer readable storage medium may include any tangible device capable of storing an instruction performed by an appropriate device, so that the computer readable storage medium having the instruction stored thereon constitutes a product including an instruction that may be performed in order to provide means for performing an operation specified by a flowchart or a block diagram. Examples of the computer readable storage medium may include an electronic storage medium, a magnetic storage medium, an optical storage medium, an electromagnetic storage medium, a semiconductor storage medium, and the like. More specific examples of the computer readable storage medium may include a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk read only memory (CD-ROM), a digital versatile disc (DVD), a Blu-ray (registered trademark) disc, a memory stick, an integrated circuit card, or the like.

The computer readable instruction may include an assembler instruction, an instruction-set-architecture (ISA) instruction, a machine instruction, a machine dependent instruction, a microcode, a firmware instruction, state-setting data, or either of source code or object code written in any combination of one or more programming languages including an object-oriented programming language such as Smalltalk (registered trademark), JAVA (registered trademark), and C++, and a conventional procedural programming language such as a "C" programming language or a similar programming language.

The computer readable instruction may be provided to a general purpose computer, a special purpose computer, or a processor or programmable circuitry of another programmable data processing device locally or via a local area network (LAN), a wide area network (WAN) such as the Internet or the like in order that the general purpose computer, the special purpose computer, or the processor or the programmable circuitry of the other programmable data processing device performs the computer readable instruction to provide means for performing operations specified by the flowchart or the block diagram. An example of the processor may include a computer processor, processing unit, microprocessor, digital signal processor, controller, microcontroller, or the like.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: system; 20: network; 30: communication terminal; 40: information processing terminal; 50: conveyance object; 60: flight path; 80: flight path; 100: flight vehicle; 102: information storage unit; 104: information acquisition unit; 106: control unit; 108: information transmission unit; 110: airframe; 120: mounting portion; 125: mounting portion; 130: support shaft; 135: support shaft; 150: power generation panel; 155: power generation panel; 200: flight vehicle management device; 300: power feeding device; 302: power feeding device; 304: power feeding device; 400: power feed management device; 402: information storage unit; 404: information acquisition unit; 406: power feed plan creation unit; 408: information transmission unit; 410: control unit; 1200: computer; 1210: host controller; 1212: CPU; 1214: RAM; 1216: graphics controller; 1218: display device; 1220: input/output controller; 1222: communication interface; 1224: storage device; 1226: DVD drive; 1227: DVD-ROM; 1230: ROM; 1240: input/output chip; and 1242: keyboard.

## Claims

1. A power feed management device (400) comprising:
an installation position information storage unit (402) which is configured to store installation position information indicating an installation position of each of a plurality of power feeding devices (300), each of which has a function of wirelessly feeding power to a flight vehicle (100) by irradiating, with a beam, a power generation panel (150) mounted on the flight vehicle (100) and a captured image captured by an imaging unit mounted on each of the plurality of power feeding devices (300);
an information acquisition unit (404) which is configured to acquire flight position information indicating a flight position of the flight vehicle (100); and
a control unit (410) which is configured to control at least one power feeding device (300) among the plurality of power feeding devices (300), such that the flight vehicle (100) is wirelessly fed with power from the at least one power feeding device (300) while the flight vehicle (100) is flying, based on the flight position information and the installation position information, wherein
the control unit (410) is configured to:
control one power feeding device (300) among the plurality of power feeding devices (300) based on the installation position of the one power feeding device (300) and a tracking result obtained by tracking a position of the power generation panel (150) using the flight position of the flight vehicle (100) and the captured image, such that the one power feeding device (300) continues to irradiate the power generation panel (150) with the beam;
control the one power feeding device (300) and another power feeding device (300) among the plurality of power feeding devices (300) such that wireless power feeding to the flight vehicle (100) is switched from the one power feeding device (300) to the other power feeding device (300) in response to a distance from the flight vehicle (100) to the other power feeding device (300) becoming shorter than a predetermined distance due to a flight of the flight vehicle (100) approaching the other power feeding device (300); and
control the other power feeding device (300), after a switching of the wireless power feeding, based on the installation position of the other power feeding device (300) and the tracking result, such that the other power feeding device (300) continues to irradiate the power generation panel (150) with the beam.

2. The power feed management device (400) according to claim 1, wherein the control unit (410) is configured to control the power feeding device (300) which wirelessly feeds power to the flight vehicle (100), such that the power feeding device (300) which wirelessly feeds power to the flight vehicle (100) is switched at a predetermined switching position from the one power feeding device (300) to the another power feeding device (300).

3. The power feed management device (400) according to claim 1 or 2, wherein the control unit (410) is configured to control the power feeding device (300) which wirelessly feeds power to the flight vehicle (100), such that the power feeding device (300) which wirelessly feeds power to the flight vehicle (100) is switched at a predetermined switching moment from the one power feeding device (300) to the another power feeding device (300).

4. The power feed management device (400) according to any one of claims 1 to 3, wherein when the power feeding device (300) which is configured to wirelessly feed power to the flight vehicle (100) is switched from the one power feeding device (300) to the another power feeding device (300), the control unit (410) is configured to control the another power feeding device (300) so as to increase a power feed amount of power wirelessly fed by the another power feeding device (300) to the flight vehicle (100), in response to a decrease in a power feed amount of power wirelessly fed by the one power feeding device (300) to the flight vehicle (100).

5. The power feed management device (400) according to any one of claims 1 to 4, wherein when the power feeding device (300) which is configured to wirelessly feed power to the flight vehicle (100) mounted with a plurality of power generation panels (150), each being identical to the power generation panel (150), is switched from the one power feeding device (300) to the another power feeding device (300), the control unit (410) is configured to control the another power feeding device (300) such that the another power feeding device (300) irradiates, with a beam, the power generation panel (150) different from the power generation panel (150) irradiated with a beam by the one power feeding device (300).

6. The power feed management device (400) according to any one of claims 1 to 5, wherein when the power feeding device (300) which is configured to wirelessly feed power to the flight vehicle (100) is switched from the one power feeding device (300) to the another power feeding device (300), the control unit (410) is configured to control the flight vehicle (100) such that the power generation panel (150) has an orientation that allows a larger power feed amount of power to be wirelessly fed from the another power feeding device (300).

7. The power feed management device (400) according to any one of claims 1 to 5, wherein
the information acquisition unit (404) further is configured to acquire flight direction information indicating a flight direction of the flight vehicle (100), and
based on the flight direction information, the control unit (410) is configured to control the flight vehicle (100) such that the power generation panel (150) has an orientation that allows air resistance received by the power generation panel (150) to be smaller, and controls the at least one power feeding device (300) such that a beam of the at least one power feeding device (300) has a shape that allows the flight vehicle (100) to be wirelessly fed with a larger power feed amount of power

8. The power feed management device (400) according to any one of claims 1 to 7, wherein
the information acquisition unit (404) further is configured to acquire flight plan information indicating a flight plan of the flight vehicle (100), and
the power feed management device (400) further comprises:
a usage schedule information storage unit which is configured to store usage schedule information indicating a usage schedule of each of the plurality of power feeding devices (300);
a power feed plan creation unit (406) which is configured to create a power feed plan for the flight vehicle (100) so as to satisfy a predetermined power feed condition, based on the flight plan information and the usage schedule information; and
an information transmission unit (408) which is configured to transmit notification information when the power feed plan creation unit (406) cannot create the power feed plan for the flight vehicle (100).

9. The power feed management device (400) according to claim 8, wherein the control unit (410) is configured to control the at least one power feeding device (300) to wirelessly feed power to the flight vehicle (100) in accordance with the power feed plan created by the power feed plan creation unit (406).

10. The power feed management device (400) according to claim 8 or 9, wherein the power feed plan creation unit (406) is configured to create the power feed plan for the flight vehicle (100) such that a flight period in which the flight vehicle (100) flying in accordance with the flight plan flies in a state of not being wirelessly fed with power is shorter than a predetermined flight period threshold.

11. The power feed management device (400) according to claim 10, wherein the power feed plan creation unit (406) is configured to create the power feed plan for the flight vehicle (100) such that there is no flight period in which the flight vehicle (100) flying in accordance with the flight plan flies in the state of not being wirelessly fed with power.

12. The power feed management device (400) according to any one of claims 8 to 11, wherein the power feed plan creation unit (406) is configured to create the power feed plan for the flight vehicle (100) such that a flight distance which the flight vehicle (100) flying in accordance with the flight plan flies in a state of not being wirelessly fed with power is shorter than a predetermined flight distance threshold.

13. The power feed management device (400) according to any one of claims 8 to 12, wherein
the information acquisition unit (404) further is configured to acquire flight plan information indicating a changed flight plan of the flight vehicle (100) when the flight plan of the flight vehicle (100) is changed while the flight vehicle (100) is flying in accordance with the flight plan, and
the power feed plan creation unit (406) is configured to change the power feed plan for the flight vehicle (100) so as to satisfy the power feed condition, based on the flight plan information indicating the changed flight plan of the flight vehicle (100) and the usage schedule information.

14. The power feed management device (400) according to claim 13, wherein the information transmission unit (408) is configured to transmit the notification information for notifying cancellation of flight according to the flight plan of the flight vehicle (100) when the power feed plan creation unit (406) cannot change the power feed plan for the flight vehicle (100).

15. A program which causes a computer (1200) to function as the power feed management device (400) according to any one of claims 1 to 14.

16. A system comprising:
the power feed management device (400) according to any one of claims 1 to 14; and
the plurality of power feeding devices (300).

17. The system according to claim 16, further comprising
the flight vehicle (100), wherein
the flight vehicle (100) includes:
a mounting portion (120) on which the power generation panel (150) is mounted;
an installation position information storage unit (402) which is configured to store the installation position information;
a flight position information acquisition unit (404) which is configured to acquire the flight position information;
a switching information reception unit which is configured to receive switching information indicating that a power feeding device (300) which is configured to wirelessly feed power to the flight vehicle (100) is switched from one power feeding device (300) among the plurality of power feeding devices (300) to another power feeding device (300) among the plurality of power feeding devices (300); and
a control unit (410) which is configured to control, in response to reception of the switching information, the flight vehicle (100) such that the power generation panel (150) has an orientation that allows a larger power feed amount of power to be wirelessly fed from the another power feeding device (300), based on the flight position information and the installation position information.

18. A flight vehicle (100) comprising:
a mounting portion (120) on which a power generation panel (150) is mounted;
an installation position information storage unit (402) which is configured to store installation position information indicating an installation position of each of a plurality of power feeding devices (300), each of which has a function of wirelessly feeding power to the flight vehicle (100) by irradiating the power generation panel (150) with a beam;
a flight position information acquisition unit (404) which is configured to acquire flight position information indicating a flight position of the flight vehicle (100);
a switching information reception unit which is configured to receive switching information, in response to a distance from the flight position of the flight vehicle (100) to a switching position becoming shorter than a predetermined distance due to a flight of the flight vehicle (100), indicating that a power feeding device (300) which wirelessly feeds power to the flight vehicle (100) is switched from one power feeding device (300) among the plurality of power feeding devices (300) to another power feeding device (300) among the plurality of power feeding devices (300); and
a control unit (410) which is configured to control, in response to reception of the switching information, the flight vehicle (100) such that the power generation panel (150) has an orientation that allows a larger power feed amount of power to be wirelessly fed from the another power feeding device (300), based on the flight position information and the installation position information.

19. A program which causes a computer (1200) to function as the flight vehicle (100) according to claim 18.

20. A method which is executed by a computer (1200), comprising:
acquiring information by acquiring flight position information indicating a flight position of a flight vehicle (100) and by capturing an image with an imaging unit mounted on each of a plurality of power feeding devices (300);
controlling at least one power feeding device (300) among the plurality of power feeding devices (300), each of which has a function of wirelessly feeding power to the flight vehicle (100) by irradiating, with a beam, a power generation panel (150) mounted on the flight vehicle (100), such that the flight vehicle (100) is wirelessly fed with power from the at least one power feeding device (300) while the flight vehicle (100) is flying, based on the flight position information and installation position information stored in the computer (1200) and indicating an installation position of each of the plurality of power feeding devices (300);
controlling one power feeding device (300) among the plurality of power feeding devices (300) based on the installation position of the one power feeding device (300) and a tracking result obtained by tracking a position of the power generation panel (150) using the flight position of the flight vehicle (100) and the captured image, such that the one power feeding device (300) continues to irradiate the power generation panel (150) with the beam;
controlling the one power feeding device (300) and another power feeding device (300) among the plurality of power feeding devices (300) such that wireless power feeding to the flight vehicle (100) is switched from the one power feeding device (300) to the other power feeding device (300) in response to a distance from the flight vehicle (100) to the other power feeding device (300) becoming shorter than a predetermined distance due to a flight of the flight vehicle (100) approaching the other power feeding device (300); and
controlling the other power feeding device (300), after a switching of the wireless power feeding, based on the installation position of the other power feeding device (300) and the tracking result, such that the other power feeding device (300) continues to irradiate the power generation panel (150) with the beam.

## Patentansprüche

1. Energiezufuhrmanagementvorrichtung, aufweisend:
eine Installationspositionsinformationsspeichereinheit (402), die dafür konfiguriert ist, Installationspositionsinformation, die eine Installationsposition jeder einer Vielzahl von Energiezufuhrvorrichtungen (300) anzeigt, von denen jede eine Funktion zum drahtlosen Zuführen von Energie zu einem Luftfahrzeug (100) aufweist, durch Bestrahlen eines am Luftfahrzeug (100) montierten Energieerzeugungspanels (150) mit einem Strahl, sowie ein durch eine an jeder der Vielzahl von Energiezufuhrvorrichtungen (300) montierten Bildaufnahmeeinheit aufgenommenes Bild zu speichern;
eine Informationserfassungseinheit (404), die dafür konfiguriert ist, Flugpositionsinformation zu erfassen, die eine Flugposition des Luftfahrzeugs (100) anzeigt; und
eine Steuereinheit (410), die dafür konfiguriert ist, mindestens eine Energiezufuhrvorrichtung (300) unter der Vielzahl von Energiezufuhrvorrichtungen (300) basierend auf der Flugpositionsinformation und der Installationspositionsinformation derart zu steuern, dass das Luftfahrzeug (100) während des Flugs des Luftfahrzeugs (100) von der mindestens einen Energiezufuhrvorrichtung (300) drahtlos mit Energie versorgt wird, wobei
die Steuereinheit (410) dafür konfiguriert ist:
eine Energiezufuhrvorrichtung (300) unter der Vielzahl von Energiezufuhrvorrichtungen (300) basierend auf der Installationsposition der einen Energiezufuhrvorrichtung (300) und einem Nachverfolgungsergebnis zu steuern, das durch Nachverfolgen einer Position des Energieerzeugungspanels (150) unter Verwendung der Flugposition des Luftfahrzeugs (100) und des aufgenommenen Bildes erhalten wird, so dass die eine Energiezufuhrvorrichtung (300) das Energieerzeugungspanel (150) weiterhin mit dem Strahl bestrahlt;
die eine Energiezufuhrvorrichtung (300) und eine weitere Energiezufuhrvorrichtung (300) unter der Vielzahl von Energiezufuhrvorrichtungen (300) derart zu steuern, dass die drahtlose Energiezufuhr zum Luftfahrzeug (100) in Antwort darauf, dass der Abstand des Luftfahrzeugs (100) zur weiteren Energiezufuhrvorrichtung (300) aufgrund eines Fluges des Luftfahrzeugs (100), das sich der weiteren Energiezufuhrvorrichtung (300) nähert, kürzer wird als ein vorgegebener Abstand, von der einen Energiezufuhrvorrichtung (300) auf die weitere Energiezufuhrvorrichtung (300) umgeschaltet wird; und
die weitere Energiezufuhrvorrichtung (300) nach einem Umschalten der drahtlosen Energiezufuhr basierend auf der Installationsposition der weiteren Energiezufuhrvorrichtung (300) und dem Nachverfolgungsergebnis derart zu steuern, dass die weitere Energiezufuhrvorrichtung (300) das Energieerzeugungspanel (150) weiterhin mit dem Strahl bestrahlt.

2. Energiezufuhrmanagementvorrichtung (400) nach Anspruch 1, wobei die Steuereinheit (410) dafür konfiguriert ist, die Energiezufuhrvorrichtung (300), die dem Luftfahrzeug (100) drahtlos Energie zuführt, derart zu steuern, dass die Energiezufuhrvorrichtung (300), die dem Luftfahrzeug (100) drahtlos Energie zuführt, an einer vorgegebenen Schaltposition von der einen Energiezufuhrvorrichtung (300) auf die weitere Energiezufuhrvorrichtung (300) umgeschaltet wird.

3. Energiezufuhrmanagementvorrichtung (400) nach Anspruch 1 oder 2, wobei die Steuereinheit (410) dafür konfiguriert ist, die Energiezufuhrvorrichtung (300), die dem Luftfahrzeug (100) drahtlos Energie zuführt, derart zu steuern, dass die Energiezufuhrvorrichtung (300), die dem Luftfahrzeug (100) drahtlos Energie zuführt, zu einem vorgegebenen Schaltzeitpunkt von der einen Energiezufuhrvorrichtung (300) auf die weitere Energiezufuhrvorrichtung (300) umgeschaltet wird.

4. Energiezufuhrmanagementvorrichtung (400) nach einem der Ansprüche 1 bis 3, wobei, wenn die Energiezufuhrvorrichtung (300), die dafür konfiguriert ist, dem Luftfahrzeug (100) drahtlos Energie zuzuführen, von der einen Energiezufuhrvorrichtung (300) auf die weitere Energiezufuhrvorrichtung (300) umgeschaltet wird, die Steuereinheit (410) dafür konfiguriert ist, die weitere Energiezufuhrvorrichtung (300) derart zu steuern, dass eine dem Luftfahrzeug (100) von der weiteren Energiezufuhrvorrichtung (300) drahtlos zugeführte Energiemenge in Antwort auf eine Verminderung einer dem Luftfahrzeug (100) von der einen Energiezufuhrvorrichtung (300) drahtlos zugeführten Energiemenge erhöht wird.

5. Energiezufuhrmanagementvorrichtung (400) nach einem der Ansprüche 1 bis 4, wobei, wenn die Energiezufuhrvorrichtung (300), die dafür konfiguriert ist, dem Luftfahrzeug (100), an dem mehrere Energieerzeugungspanels (150) montiert sind, die jeweils mit dem Energieerzeugungspanel (150) identisch sind, drahtlos Energie zuzuführen, von der einen Energiezufuhrvorrichtung (300) auf die weitere Energiezufuhrvorrichtung (300) umgeschaltet wird, die Steuereinheit (410) dafür konfiguriert ist, die weitere Energiezufuhrvorrichtung (300) derart zu steuern, dass die weitere Energiezufuhrvorrichtung (300) das Energieerzeugungspanel (150) mit einem Strahl bestrahlt, das vom Energieerzeugungspanel (150) verschieden ist, das durch die eine Energiezufuhrvorrichtung (300) mit einem Strahl bestrahlt wird.

6. Energiezufuhrmanagementvorrichtung (400) nach einem der Ansprüche 1 bis 5, wobei, wenn die Energiezufuhrvorrichtung (300), die dafür konfiguriert ist, dem Luftfahrzeug (100) drahtlos Energie zuzuführen, von der einen Energiezufuhrvorrichtung (300) auf die weitere Energiezufuhrvorrichtung (300) umgeschaltet wird, die Steuereinheit (410) dafür konfiguriert ist, das Luftfahrzeug (100) derart zu steuern, dass das Energieerzeugungspanel (150) eine Ausrichtung aufweist, die es ermöglicht, eine größere Energiemenge drahtlos von der weiteren Energiezufuhrvorrichtung (300) zu empfangen.

7. Energiezufuhrmanagementvorrichtung (400) nach einem der Ansprüche 1 bis 5, wobei
die Informationserfassungseinheit (404) ferner dafür konfiguriert ist, Flugrichtungsinformation zu erfassen, die eine Flugrichtung des Luftfahrzeugs (100) anzeigt, und
die Steuereinheit (410) basierend auf der Flugrichtungsinformation dafür konfiguriert ist, das Luftfahrzeug (100) derart zu steuern, dass das Energieerzeugungspanel (150) eine Ausrichtung aufweist, die es ermöglicht, dass der durch das Energieerzeugungspanel (150) empfangene Luftwiderstand geringer ist, und die mindestens eine Energiezufuhrvorrichtung (300) derart zu steuern, dass ein Strahl der mindestens einen Energiezufuhrvorrichtung (300) eine Form aufweist, die es ermöglicht, dass das Luftfahrzeug (100) drahtlos eine größere Energiemenge empfängt.

8. Energiezufuhrmanagementvorrichtung (400) nach einem der Ansprüche 1 bis 7, wobei
die Informationserfassungseinheit (404) ferner dafür konfiguriert ist, Flugplaninformation zu erfassen, die einen Flugplan des Luftfahrzeugs (100) anzeigt, und
die Energiezufuhrmanagementvorrichtung (400) ferner aufweist:
eine Nutzungsplaninformationsspeichereinheit, die dafür konfiguriert ist, Nutzungsplaninformation zu speichern, die einen Nutzungsplan für jede der Vielzahl von Energiezufuhrvorrichtungen (300) anzeigt;
eine Energiezufuhrplanerstellungseinheit (406), die dafür konfiguriert ist, basierend auf der Flugplaninformation und der Nutzungsplaninformation einen Energiezufuhrplan für das Luftfahrzeug (100) derart zu erstellen, dass eine vorgegebene Energiezufuhrbedingung erfüllt ist; und
eine Informationsübertragungseinheit (408), die dafür konfiguriert ist, Benachrichtigungsinformation zu übertragen, wenn die Energiezufuhrplanerstellungseinheit (406) den Energiezufuhrplan für das Luftfahrzeug (100) nicht erstellen kann.

9. Energiezufuhrmanagementvorrichtung (400) nach Anspruch 8, wobei die Steuereinheit (410) dafür konfiguriert ist, die mindestens eine Energiezufuhrvorrichtung (300) derart zu steuern, dass dem Luftfahrzeug (100) gemäß dem von der Energiezufuhrplanerstellungseinheit (406) erstellten Energiezufuhrplan drahtlos Energie zugeführt wird.

10. Energiezufuhrmanagementvorrichtung (400) nach Anspruch 8 oder 9, wobei die Energiezufuhrplanerstellungseinheit (406) dafür konfiguriert ist, den Energiezufuhrplan für das Luftfahrzeug (100) derart zu erstellen, dass eine Flugdauer, in der das gemäß dem Flugplan fliegende Luftfahrzeug (100) in einem Zustand fliegt, in dem ihm nicht drahtlos Energie zugeführt wird, kürzer ist als ein vorgegebener Schwellenwert für die Flugdauer.

11. Energiezufuhrmanagementvorrichtung (400) nach Anspruch 10, wobei die Energiezufuhrplanerstellungseinheit (406) dafür konfiguriert ist, den Energiezufuhrplan für das Luftfahrzeug (100) derart zu erstellen, dass es keine Flugzeitdauer gibt, in der das gemäß dem Flugplan fliegende Luftfahrzeug (100) in einem Zustand fliegt, in dem ihm nicht drahtlos Energie zugeführt wird.

12. Energiezufuhrmanagementvorrichtung (400) nach einem der Ansprüche 8 bis 11, wobei die Energiezufuhrplanerstellungseinheit (406) dafür konfiguriert ist, den Energiezufuhrplan für das Luftfahrzeug (100) derart zu erstellen, dass eine Flugstrecke, die das gemäß dem Flugplan fliegende Luftfahrzeug (100) in einem Zustand zurücklegt, in dem ihm nicht drahtlos Energie zugeführt wird, kürzer ist als ein vorgegebener Schwellenwert für die Flugstrecke.

13. Energiezufuhrmanagementvorrichtung (400) nach einem der Ansprüche 8 bis 12, wobei
die Informationserfassungseinheit (404) ferner dafür konfiguriert ist, Flugplaninformation zu erfassen, die einen geänderten Flugplan des Luftfahrzeugs (100) anzeigt, wenn der Flugplan des Luftfahrzeugs (100) geändert wird, während das Luftfahrzeug (100) gemäß dem Flugplan fliegt, und
die Energiezufuhrplanerstellungseinheit (406) dafür konfiguriert ist, den Energiezufuhrplan für das Luftfahrzeug (100) basierend auf der Flugplaninformation, die den geänderten Flugplan des Luftfahrzeugs (100) anzeigt, und der Nutzungsplaninformation, derart zu ändern, dass die Energiezufuhrbedingung erfüllt ist.

14. Energiezufuhrmanagementvorrichtung (400) nach Anspruch 13, wobei die Informationsübertragungseinheit (408) dafür konfiguriert ist, die Benachrichtigungsinformation zum Mitteilen einer Stornierung eines Flugs gemäß dem Flugplan des Luftfahrzeugs (100) zu übertragen, wenn die Energiezufuhrplanerstellungseinheit (406) den Energiezufuhrplan für das Luftfahrzeug (100) nicht ändern kann.

15. Programm, das einen Computer (1200) veranlasst, als die Energiezufuhrmanagementvorrichtung (400) nach einem der Ansprüche 1 bis 14 zu funktionieren.

16. System, aufweisend:
die Energiezufuhrmanagementvorrichtung (400) nach einem der Ansprüche 1 bis 14; und
die Vielzahl von Energiezufuhrvorrichtungen (300).

17. System nach Anspruch 16, ferner aufweisend:
das Luftfahrzeug (100), wobei
das Luftfahrzeug (100) aufweist:
einen Montageabschnitt (120), an dem das Energieerzeugungspanel (150) montiert ist;
eine Installationspositionsinformationsspeichereinheit (402), die dafür konfiguriert ist, die Installationspositionsinformation zu speichern;
eine Flugpositionsinformationserfassungseinheit (404), die dafür konfiguriert ist, die Flugpositionsinformation zu erfassen;
eine Schaltinformationsempfangseinheit, die dafür konfiguriert ist, Schaltinformation zu empfangen, die anzeigt, dass eine Energiezufuhrvorrichtung (300), die dafür konfiguriert ist, dem Luftfahrzeug (100) drahtlos Energie zuzuführen, von einer Energiezufuhrvorrichtung (300) unter der Vielzahl von Energiezufuhrvorrichtungen (300) auf eine weitere Energiezufuhrvorrichtung (300) unter der Vielzahl von Energiezufuhrvorrichtungen (300) umgeschaltet wird; und
eine Steuereinheit (410), die dafür konfiguriert ist, in Antwort auf den Empfang der Schaltinformation das Luftfahrzeug (100) basierend auf der Flugpositionsinformation und der Installationspositionsinformation derart zu steuern, dass das Energiezeugungspanel (150) eine Ausrichtung einnimmt, die es ermöglicht, eine größere Energiemenge drahtlos von der weiteren Energiezufuhrvorrichtung (300) zu empfangen.

18. Luftfahrzeug (100), aufweisend:
einen Montageabschnitt (120), an dem das Energieerzeugungspanel (150) montiert ist;
eine Installationspositionsinformationsspeichereinheit (402), die dafür konfiguriert ist, Installationspositionsinformation zu speichern, die eine Installationsposition jeder einer Vielzahl von Energiezufuhrvorrichtungen (300) anzeigt, von denen jede eine Funktion hat, dem Luftfahrzeug (100) durch Bestrahlen des Energieerzeugungspanels (150) mit einem Strahl drahtlos Energie zuzuführen;
eine Flugpositionsinformationserfassungseinheit (404), die dafür konfiguriert ist, Flugpositionsinformation zu erfassen, die eine Flugposition des Luftfahrzeugs (100) anzeigt;
eine Schaltinformationsempfangseinheit, die dafür konfiguriert ist, Schaltinformation in Antwort darauf zu empfangen, dass ein Abstand von der Flugposition des Luftfahrzeugs (100) zu einer Schaltposition aufgrund eines Fluges des Luftfahrzeugs (100) kleiner als ein vorgegebener Abstand wird, was anzeigt, dass eine Energiezufuhrvorrichtung (300), die dem Luftfahrzeug (100) drahtlos Energie zuführt, von einer Energiezufuhrvorrichtung (300) unter der Vielzahl von Energiezufuhrvorrichtungen (300) auf eine weitere Energiezufuhrvorrichtung (300) unter der Vielzahl von Energiezufuhrvorrichtungen (300) umgeschaltet wird; und
eine Steuereinheit (410), die dafür konfiguriert ist, in Antwort auf den Empfang der Schaltinformation das Luftfahrzeug (100) basierend auf der Flugpositionsinformation und der Installationspositionsinformation derart zu steuern, dass das Energieerzeugungspanel (150) eine Ausrichtung aufweist, die es ermöglicht, eine größere Energiemenge drahtlos von der weiteren Energiezufuhrvorrichtung (300) zu empfangen.

19. Programm, das einen Computer (1200) veranlasst, als das Luftfahrzeug (100) nach Anspruch 18 zu funktionieren.

20. Verfahren, das durch einem Computer (1200) ausgeführt wird, aufweisend:
Erfassen von Information durch Erfassen von Flugpositionsinformation, die eine Flugposition eines Luftfahrzeugs (100) anzeigt, und durch Aufnehmen eines Bildes durch eine Bildaufnahmeeinheit, die an jeder einer Vielzahl von Energiezufuhrvorrichtungen (300) montiert ist;
Steuern mindestens einer Energiezufuhrvorrichtung (300) unter der Vielzahl von Energiezufuhrvorrichtungen (300), von denen jede eine Funktion hat, dem Luftfahrzeug (100) durch Bestrahlen eines am Luftfahrzeug (100) montierten Energieerzeugungspanels (150) mit einem Strahl drahtlos Energie zuzuführen, so dass dem Luftfahrzeug (100) während des Fluges des Luftfahrzeugs (100) drahtlos von der mindestens einen Energiezufuhrvorrichtung (300) Energie zugeführt wird, basierend auf der im Computer (1200) gespeicherten Flugpositionsinformation und Installationspositionsinformation, die eine Installationsposition jeder der Vielzahl von Energiezufuhrvorrichtungen (300) anzeigt;
Steuern einer Energiezufuhrvorrichtung (300) unter der Vielzahl von Energiezufuhrvorrichtungen (300) basierend auf der Installationsposition der einen Energiezufuhrvorrichtung (300) und einem Nachverfolgungsergebnis, das durch Nachverfolgen einer Position des Stromerzeugungspanels (150) unter Verwendung der Flugposition des Luftfahrzeugs (100) und des aufgenommenen Bildes erhalten wird, so dass die eine Energiezufuhrvorrichtung (300) das Stromerzeugungspanel (150) weiterhin mit dem Strahl bestrahlt;
Steuern der einen Energiezufuhrvorrichtung (300) und einer weiteren Energiezufuhrvorrichtung (300) unter der Vielzahl von Energiezufuhrvorrichtungen (300) derart, dass die drahtlose Energiezufuhr zum Luftfahrzeug (100) in Antwort darauf, dass der Abstand des Luftfahrzeugs (100) zur weiteren Energiezufuhrvorrichtung (300) aufgrund dessen, dass sich ein Flug des Luftfahrzeugs (100) der weiteren Energiezufuhrvorrichtung (300) nähert, kleiner wird als ein vorgegebener Abstand, von der einen Energiezufuhrvorrichtung (300) auf die weitere Energiezufuhrvorrichtung (300) umgeschaltet wird; und
Steuern der weiteren Energiezufuhrvorrichtung (300) nach einem Umschalten der drahtlosen Energieversorgung basierend auf der Installationsposition der weiteren Energiezufuhrvorrichtung (300) und dem Nachverfolgungsergebnis, so dass die weitere Energiezufuhrvorrichtung (300) das Energieerzeugungspanel (150) weiterhin mit dem Strahl bestrahlt.

## Revendications

1. Dispositif de gestion d'alimentation en énergie (400) comprenant :
une unité de stockage d'informations de position d'installation (402) qui est configurée pour stocker des informations de position d'installation indiquant une position d'installation de chacun d'une pluralité de dispositifs d'alimentation en énergie (300), chacun ayant une fonction d'alimentation en énergie sans fil d'un véhicule volant (100) en éclairant, avec un faisceau, un panneau de génération d'énergie (150) monté sur le véhicule volant (100) et une image capturée par une unité d'imagerie montée sur chacun de la pluralité de dispositifs d'alimentation en énergie (300) ;
une unité d'acquisition d'informations (404) qui est configurée pour acquérir des informations de position de vol indiquant une position de vol du véhicule volant (100) ; et
une unité de commande (410) qui est configurée pour commander au moins un dispositif d'alimentation en énergie (300) parmi la pluralité de dispositifs d'alimentation en énergie (300), de telle sorte que le véhicule volant (100) est alimenté sans fil en énergie depuis ledit au moins un dispositif d'alimentation en énergie (300) pendant que le véhicule volant (100) vole, en se basant sur les informations de position de vol et les informations de position d'installation, dans lequel
l'unité de commande (410) est configurée pour :
commander un dispositif d'alimentation en énergie (300) parmi la pluralité de dispositifs d'alimentation en énergie (300) en se basant sur la position d'installation dudit dispositif d'alimentation en énergie (300) et un résultat de pistage obtenu en pistant une position du panneau de génération d'énergie (150) en utilisant la position de vol du véhicule volant (100) et l'image capturée, de telle sorte que le dispositif d'alimentation en énergie (300) continue à éclairer le panneau de génération d'énergie (150) avec le faisceau ;
commander ledit dispositif d'alimentation en énergie (300) et un autre dispositif d'alimentation en énergie (300) parmi la pluralité de dispositifs d'alimentation en énergie (300) de telle sorte que l'alimentation en énergie sans fil du véhicule volant (100) est commutée depuis ledit dispositif d'alimentation en énergie (300) à l'autre dispositif d'alimentation en énergie (300) en réponse au fait qu'une distance depuis le véhicule volant (100) jusqu'à l'autre dispositif d'alimentation en énergie (300) devient plus courte qu'une distance prédéterminée du fait d'un vol du véhicule volant (100) pour s'approcher de l'autre dispositif d'alimentation en énergie (300) ; et
commander l'autre dispositif d'alimentation en énergie (300), après une commutation de l'alimentation en énergie sans fil, en se basant sur la position d'installation de l'autre dispositif d'alimentation en énergie (300) et le résultat de pistage, de telle sorte que l'autre dispositif d'alimentation en énergie (300) continue à éclairer le panneau de génération d'énergie (150) avec le faisceau.

2. Dispositif de gestion d'alimentation en énergie (400) selon la revendication 1, dans lequel l'unité de commande (410) est configurée pour commander le dispositif d'alimentation en énergie (300) qui alimente en énergie sans fil le véhicule volant (100), de telle sorte que le dispositif d'alimentation en énergie (300) qui alimente en énergie sans fil le véhicule volant (100) est commuté en une position de commutation prédéterminée depuis ledit dispositif d'alimentation en énergie (300) à l'autre dispositif d'alimentation en énergie (300).

3. Dispositif de gestion d'alimentation en énergie (400) selon la revendication 1 ou 2, dans lequel l'unité de commande (410) est configurée pour commander le dispositif d'alimentation en énergie (300) qui alimente en énergie sans fil le véhicule volant (100), de telle sorte que le dispositif d'alimentation en énergie (300) qui alimente en énergie sans fil le véhicule volant (100) est commuté à un instant de commutation prédéterminé depuis ledit dispositif d'alimentation en énergie (300) à l'autre dispositif d'alimentation en énergie (300).

4. Dispositif de gestion d'alimentation en énergie (400) selon l'une quelconque des revendications 1 à 3, dans lequel lorsque le dispositif d'alimentation en énergie (300) qui est configuré pour alimenter en énergie sans fil le véhicule volant (100) est commuté depuis ledit dispositif d'alimentation en énergie (300) à l'autre dispositif d'alimentation en énergie (300), l'unité de commande (410) est configurée pour commander l'autre dispositif d'alimentation en énergie (300) de manière à augmenter une quantité d'énergie alimentant sans fil depuis l'autre dispositif d'alimentation en énergie (300) le véhicule volant (100), en réponse à une diminution d'une quantité d'énergie alimentant sans fil depuis ledit dispositif d'alimentation en énergie (300) au véhicule volant (100).

5. Dispositif de gestion d'alimentation en énergie (400) selon l'une quelconque des revendications 1 à 4, dans lequel lorsque le dispositif d'alimentation en énergie (300) qui est configuré pour alimenter en énergie sans fil le véhicule volant (100) sur lequel sont montés une pluralité de panneaux de génération d'énergie (150), chacun étant identique au panneau de génération d'énergie (150), est commuté depuis ledit dispositif d'alimentation en énergie (300) à l'autre dispositif d'alimentation en énergie (300), l'unité de commande (410) est configurée pour commander l'autre dispositif d'alimentation en énergie (300) de telle sorte que l'autre dispositif d'alimentation en énergie (300) éclaire, avec un faisceau, le panneau de génération d'énergie (150) différent du panneau de génération d'énergie (150) éclairé par un faisceau par ledit dispositif d'alimentation en énergie (300).

6. Dispositif de gestion d'alimentation en énergie (400) selon l'une quelconque des revendications 1 à 5, dans lequel lorsque le dispositif d'alimentation en énergie (300) qui est configuré pour alimenter en énergie sans fil le véhicule volant (100) est commuté depuis ledit dispositif d'alimentation en énergie (300) à l'autre dispositif d'alimentation en énergie (300), l'unité de commande (410) est configurée pour commander le véhicule volant (100) de telle sorte que le panneau de génération d'énergie (150) présente une orientation qui permet à une quantité plus importante d'énergie d'être alimentée sans fil depuis l'autre dispositif d'alimentation en énergie (300).

7. Dispositif de gestion d'alimentation en énergie (400) selon l'une quelconque des revendications 1 à 5, dans lequel
l'unité d'acquisition d'informations (404) est en outre configurée pour acquérir des informations de direction de vol indiquant une direction de vol du véhicule volant (100), et
en se basant sur les informations de direction de vol, l'unité de commande (410) est configurée pour commander le véhicule volant (100) de telle sorte que le panneau de génération d'énergie (150) présente une orientation qui permet à la résistance de l'air reçue par le panneau de génération d'énergie (150) d'être plus faible, et commande l'au moins un dispositif d'alimentation en énergie (300) de telle sorte qu'un faisceau de l'au moins un dispositif d'alimentation en énergie (300) a une forme qui permet au véhicule volant (100) d'être alimenté sans fil par une quantité plus importante d'alimentation en énergie.

8. Dispositif de gestion d'alimentation en énergie (400) selon l'une quelconque des revendications 1 à 7, dans lequel
l'unité d'acquisition d'informations (404) est en outre configurée pour acquérir des informations de plan de vol indiquant un plan de vol du véhicule volant (100), et
le dispositif de gestion d'alimentation en énergie (400) comprend en outre :
une unité de stockage d'informations de planification d'usage qui est configurée pour stocker des informations de planification d'usage indiquant une planification d'usage de chacun de la pluralité de dispositifs d'alimentation en énergie (300) ;
une unité de création de plan d'alimentation en énergie (406) qui est configurée pour créer un plan d'alimentation en énergie pour le véhicule volant (100) de manière à satisfaire une condition d'alimentation en énergie prédéterminée, en se basant sur les informations de plan de vol et les informations de planification d'usage ; et
une unité de transmission d'informations (408) qui est configurée pour transmettre des informations de notification lorsque l'unité de création de plan d'alimentation en énergie (406) ne peut pas créer le plan d'alimentation en énergie pour le véhicule volant (100).

9. Dispositif de gestion d'alimentation en énergie (400) selon la revendication 8, dans lequel l'unité de commande (410) est configurée pour commander l'au moins un dispositif d'alimentation en énergie (300) pour alimenter en énergie sans fil le véhicule volant (100) conformément au plan d'alimentation en énergie créée par l'unité de création de plan d'alimentation en énergie (406).

10. Dispositif de gestion d'alimentation en énergie (400) selon la revendication 8 ou 9, dans lequel l'unité de création de plan d'alimentation en énergie (406) est configurée pour créer le plan d'alimentation en énergie pour le véhicule volant (100) de telle sorte qu'une période de vol dans laquelle le véhicule volant (100) qui vole conformément au plan de vol vole dans un état de non-alimentation sans fil en énergie est plus courte qu'un seuil de période de vol prédéterminé.

11. Dispositif de gestion d'alimentation en énergie (400) selon la revendication 10, dans lequel l'unité de création de plan d'alimentation en énergie (406) est configurée pour créer le plan d'alimentation en énergie pour le véhicule volant (100) de telle sorte qu'il n'y a aucune période de vol dans laquelle le véhicule volant (100) qui vole conformément au plan de vol vole dans l'état de non-alimentation sans fil en énergie.

12. Dispositif de gestion d'alimentation en énergie (400) selon l'une quelconque des revendications 8 à 11, dans lequel l'unité de création de plan d'alimentation en énergie (406) est configurée pour créer le plan d'alimentation en énergie pour le véhicule volant (100) de telle sorte qu'une distance de vol dans laquelle le véhicule volant (100) qui vole conformément au plan de vol vole dans un état de non-alimentation sans fil en énergie est plus courte qu'un seuil de distance de vol prédéterminé.

13. Dispositif de gestion d'alimentation en énergie (400) selon l'une quelconque des revendications 8 à 12, dans lequel
l'unité d'acquisition d'informations (404) est en outre configurée pour acquérir des informations de plan de vol indiquant un changement de plan de vol du véhicule volant (100) lorsque le plan de vol du véhicule volant (100) est modifié pendant que le véhicule volant (100) vole conformément au plan de vol, et
l'unité de création de plan d'alimentation en énergie (406) est configurée pour modifier le plan d'alimentation en énergie pour le véhicule volant (100) de manière à satisfaire la condition d'alimentation en énergie, en se basant sur les informations de plan de vol indiquant le plan de vol modifié du véhicule volant (100) et les informations de planification d'usage.

14. Dispositif de gestion d'alimentation en énergie (400) selon la revendication 13, dans lequel l'unité de transmission d'informations (408) est configurée pour transmettre les informations de notification pour notifier de l'annulation du vol conformément au plan de vol du véhicule volant (100) lorsque l'unité de création de plan d'alimentation en énergie (406) ne peut pas modifier le plan d'alimentation d'énergie pour le véhicule volant (100).

15. Programme qui amène un ordinateur (1200) à fonctionner en tant que le dispositif de gestion d'alimentation en énergie (400) selon l'une quelconque des revendications 1 à 14.

16. Système comprenant :
le dispositif de gestion d'alimentation en énergie (400) selon l'une quelconque des revendications 1 à 14, et
la pluralité de dispositifs d'alimentation en énergie (300).

17. Système selon la revendication 16, comprenant en outre
le véhicule volant (100), dans lequel
le véhicule volant (100) inclut :
une partie de montage (120) sur laquelle le panneau de génération d'énergie (150) est monté ;
une unité de stockage d'informations de position d'installation (402) qui est configurée pour stocker les informations de position d'installation ;
une unité d'acquisition d'informations de position de vol (404) qui est configurée pour acquérir les informations de position de vol ;
une unité de réception d'informations de commutation qui est configurée pour recevoir des informations de commutation indiquant qu'un dispositif d'alimentation en énergie (300) qui est configuré pour alimenter en énergie sans fil le véhicule volant (100) est commuté depuis un dispositif d'alimentation en énergie (300) parmi la pluralité de dispositifs d'alimentation en énergie (300) à un autre dispositif d'alimentation en énergie (300) parmi la pluralité de dispositifs d'alimentation en énergie (300) ; et
une unité de commande (410) qui est configurée pour commander, en réponse à la réception des informations de commutation, le véhicule volant (100) de telle sorte que le panneau de génération d'énergie (150) présente une orientation qui permet à une quantité supérieure d'énergie d'être alimentée sans fil depuis un autre dispositif d'alimentation en énergie (300), en se basant sur les informations de position de vol et les informations de position d'installation.

18. Véhicule volant (100) comprenant :
une partie de montage (120) sur laquelle un panneau de génération d'énergie (150) est monté ;
une unité de stockage d'informations de position d'installation (402) qui est configurée pour stocker des informations de position d'installation indiquant une position d'installation de chacun d'une pluralité de dispositifs d'alimentation en énergie (300), chacun ayant une fonction d'alimentation en énergie sans fil d'un véhicule volant (100) en éclairant le panneau de génération d'énergie (150) avec un faisceau ;
une unité d'acquisition d'informations de position de vol (404) qui est configurée pour acquérir des informations de position de vol indiquant une position de vol du véhicule volant (100) ;
une unité de réception d'informations de commutation qui est configurée pour recevoir des informations de commutation, en réponse au fait qu'une distance depuis la position de vol du véhicule volant (100) à une position de commutation devient plus courte qu'une distance prédéterminée du fait d'un vol du véhicule volant (100), indiquant qu'un dispositif d'alimentation en énergie (300) qui alimente sans fil en énergie le véhicule volant (100) commute depuis un dispositif d'alimentation en énergie (300) parmi la pluralité de dispositifs d'alimentation en énergie (300) à un autre dispositif d'alimentation en énergie (300) parmi la pluralité de dispositifs d'alimentation en énergie (300) ; et
une unité de commande (410) qui est configurée pour commander, en réponse à la réception des informations de commutation, le véhicule volant (100) de telle sorte que le panneau de génération d'énergie (150) présente une orientation qui permet à une quantité supérieure d'énergie d'être alimentée sans fil depuis un autre dispositif d'alimentation en énergie (300), en se basant sur les informations de position de vol et les informations de position d'installation.

19. Programme qui amène un ordinateur (1200) à fonctionner en tant que le véhicule volant (100) selon la revendication 18.

20. Procédé qui est exécuté par un ordinateur (1200), comprenant les étapes consistant à :
acquérir des informations en acquérant des informations de position de vol indiquant une position de vol d'un véhicule volant (100) et en capturant une image avec une unité d'imagerie montée sur chacun d'une pluralité de dispositifs d'alimentation en énergie (300) ;
commander au moins un dispositif d'alimentation en énergie (300) parmi la pluralité de dispositifs d'alimentation en énergie (300), chacun ayant une fonction d'alimentation sans fil en énergie du véhicule volant (100) en éclairant, avec un faisceau, un panneau de génération d'énergie (150) monté sur le véhicule volant (100), de telle sorte que le véhicule volant (100) est alimenté sans fil en énergie depuis l'au moins un dispositif d'alimentation en énergie (300) pendant que le véhicule volant (100) vole, en se basant sur les informations de position de vol et les informations de position d'installation stockées dans l'ordinateur (1200) et indiquant une position d'installation de chacun de la pluralité de dispositifs d'alimentation en énergie (300) ;
commander un dispositif d'alimentation en énergie (300) parmi la pluralité de dispositifs d'alimentation en énergie (300) en se basant sur la position d'installation dudit dispositif d'alimentation en énergie (300) et un résultat de pistage obtenu en pistant une position du panneau de génération d'énergie (150) en utilisant la position de vol du véhicule volant (100) et l'image capturée, de telle sorte que le dispositif d'alimentation en énergie (300) continue à éclairer le panneau de génération d'énergie (150) avec le faisceau ;
commander ledit dispositif d'alimentation en énergie (300) et un autre dispositif d'alimentation en énergie (300) parmi la pluralité de dispositifs d'alimentation en énergie (300) de telle sorte que l'alimentation en énergie sans fil du véhicule volant (100) est commutée depuis ledit dispositif d'alimentation en énergie (300) à l'autre dispositif d'alimentation en énergie (300) en réponse au fait qu'une distance depuis le véhicule volant (100) à l'autre dispositif d'alimentation en énergie (300) devient plus courte qu'une distance prédéterminée du fait d'un vol du véhicule volant (100) pour s'approcher de l'autre dispositif d'alimentation en énergie (300) ; et
commander l'autre dispositif d'alimentation en énergie (300), après une commutation de l'alimentation en énergie sans fil, en se basant sur la position d'installation de l'autre dispositif d'alimentation en énergie (300) et le résultat de pistage, de telle sorte que l'autre dispositif d'alimentation en énergie (300) continue à éclairer le panneau de génération d'énergie (150) avec le faisceau.
